# EUROPEAN PATENT APPLICATION

(11) **EP 4 117 299 A1**
(43) Date of publication of application: **11.01.2023**
(21) Application number: 21784955.3
(22) Date of filing: 06.04.2021
(51) Int. Cl.: H04N 21/6405, H04L 29/06

(54) **COMMUNICATION METHOD AND DEVICE FOR MULTICAST/BROADCAST SERVICE**

(30) Priority: 10.04.2020 CN 202010281204
(71) Applicant: Huawei Technologies Co., Ltd., Shenzhen, Guangdong 518129, (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Gill Jennings & Every LLP
(86) International application number: PCT/CN2021/085749
(87) International publication number: WO 2021/204131

(57) **Abstract**

Embodiments of this application provide a multicast/broadcast service communication method and an apparatus, and relate to the communication field, to reduce network resource overheads. The method is as follows: A terminal device determines a first multicast/broadcast service, where the first multicast/broadcast service is a multicast/broadcast service that the terminal device is to leave. The terminal device sends a first message, where the first message carries identification information of the first multicast/broadcast service. Embodiments of this application are applied to a mobile communication system such as 5G.

## Description

This application claims priority to Chinese Patent Application No. 202010281204.2, filed with the China National Intellectual Property Administration on April 10, 2020 and entitled "MULTICAST/BROADCAST SERVICE COMMUNICATION METHOD AND APPARATUS", which is incorporated herein by reference in its entirety.

### TECHNICAL FIELD

This application relates to the communications field, and in particular, to a multicast/broadcast service communication method and an apparatus.

### BACKGROUND

With development of mobile internet, mobile high-definition video services are experiencing a surge. Users gradually change from conventionally watching hot programs on fixed televisions to watching hot programs in the mobile internet on terminals such as mobile phones. In this way, video services have increasingly strong impact on the mobile internet. If transmission of the video services can be optimized in an air interface multicast/broadcast manner, impact of video traffic on a mobile network will be greatly reduced.

In previous generations of mobile communication technologies, for example, a 3rd generation (3rd generation, 3G) mobile communication technology and a 4th generation (4th generation, 4G) mobile communication technology, it is difficult to promote a multicast/broadcast solution. Specifically, in the multicast/broadcast solution in the previous generations of mobile communication technologies, a dedicated network element and interface that support multicast/broadcast need to be added to an existing communication architecture, and a dedicated multicast/broadcast channel is further needed. This not only increases overheads of an operator, but also increases complexity of a terminal.

To overcome the foregoing difficulties, how to support a multicast/broadcast service (5G Multicast/Broadcast Service, 5MBS) in a 5th generation (5th generation, 5G) mobile communication network architecture becomes a key research topic.

A key research issue (Key Issue) of the 5MBS research topic is multicast/broadcast service session management (multicast/broadcast service (MBS) Session Management). For this research issue, how a terminal device leaves a multicast/broadcast service is an urgent problem to be resolved.

### SUMMARY

Embodiments of this application provide a multicast/broadcast service communication method and an apparatus, and provide a procedure in which a terminal device leaves a multicast/broadcast service, so as to reduce network resource overheads.

According to a first aspect, an embodiment of this application provides a multicast/broadcast service communication method, including: A terminal device determines a first multicast/broadcast service, where the first multicast/broadcast service is a multicast/broadcast service that the terminal device is to leave. The terminal device sends a first message, where the first message carries identification information of the first multicast/broadcast service.

Based on the method provided in this embodiment of this application, the terminal device may determine the identification information of the first multicast/broadcast service that the terminal device needs to leave, and then the terminal device sends the first message, where the first message carries the identification information of the first multicast/broadcast service, so that an access network device and/or a core network device (such as an access and mobility management function network element/a session management function network element/a user plane function network element/a multicast/broadcast control plane function network element) may perform, based on the identification information of the first multicast/broadcast service, an operation for the terminal device to leave the first multicast/broadcast service. Therefore, the terminal device can leave the first multicast/broadcast service. After the terminal device leaves the first multicast/broadcast service, a network may release a corresponding network resource, thereby reducing network resource overheads.

In a possible implementation, the method further includes: The terminal device receives a second message, where the second message carries information indicating that the terminal device has left the first multicast/broadcast service, or the second message carries identification information of a multicast/broadcast service that the terminal device has left. For example, the terminal device may receive the second message from the access network device, or the terminal device may receive the second message from a server of the first multicast/broadcast service.

In a possible implementation, the first message further carries a first information element and/or a cause value of the first message, where the first information element indicates that an operation type corresponding to the first multicast/broadcast service is leave, and the cause value of the first message represents that the terminal device is to leave the first multicast/broadcast service.

In a possible implementation, the first message is a protocol data unit (protocol data unit, PDU) session modification request message, a PDU session release request message, a radio resource control (radio resource control, RRC) message, or a hypertext transfer protocol (hypertext transport protocol, HTTP) message. For example, the terminal device may send a PDU session modification request message (PDU Session Modification Request) or a PDU session release request message to the access and mobility management function network element, or the terminal device may send a radio resource control RRC message to the access network device, or the terminal device may send a hypertext transfer protocol HTTP message to the server of the first multicast/broadcast service. In addition, when the first message is a PDU session modification request or a PDU session release request, the first message may be included in a non-access stratum (non-access stratum, NAS) message.

In a possible implementation, the second message is a radio resource control RRC message or a hypertext transfer protocol HTTP message. The RRC message may be an RRC Connection Reconfiguration (RRC Connection Reconfiguration), an RRCReconfiguration (RRCReconfiguration), an RRCReestablishment (RRCReestablishment), or an RRCRelease (RRCRelease). For example, the terminal device may receive a radio resource control RRC message sent by the access network device, or the terminal device may receive a hypertext transfer protocol HTTP message sent by the server of the first multicast/broadcast service. The second message may include a PDU session modification command (PDU session modification command), and the identification information of the multicast/broadcast service may be included in the PDU session modification command.

According to a second aspect, an embodiment of this application provides a multicast/broadcast service communication method, including: A session management function network element receives a third message, where the third message carries identification information of a first multicast/broadcast service, and the first multicast/broadcast service is a multicast/broadcast service that a terminal device is to leave. The session management function network element updates a protocol data unit PDU session context of the terminal device based on the third message.

Based on the method provided in this embodiment of this application, after receiving the third message, the session management function network element may perform, based on the third message, an operation for the terminal device to leave the first multicast/broadcast service, in other words, may update the protocol data unit PDU session context of the terminal device based on the third message, so that the terminal device can leave the first multicast/broadcast service. After the terminal device leaves the first multicast/broadcast service, a network may release a corresponding network resource, thereby reducing network resource overheads.

In a possible implementation, that the session management function network element updates a protocol data unit PDU session context of the terminal device based on the third message includes: The session management function network element deletes the identification information of the first multicast/broadcast service from the PDU session context of the terminal device.

In a possible implementation, the session management function network element deletes, based on the third message from a context corresponding to the first multicast/broadcast service, an identifier of the terminal device and/or a session management context identifier of a PDU session associated with the first multicast/broadcast service. A session management context identifier of a PDU session may also be referred to as a PDU session context identifier.

In a possible implementation, the session management function network element releases, from the session management context of a PDU session of the terminal device, unicast quality of service QoS information corresponding to the first multicast/broadcast service. A PDU session context may also be referred to as a session management context of a PDU session.

In a possible implementation, the third message further carries a first information element and/or a cause value of the third message, where the first information element indicates that an operation type corresponding to the first multicast/broadcast service is leave, and the cause value of the third message represents that the terminal device is to leave the first multicast/broadcast service. The session management function network element may update the protocol data unit PDU session context of the terminal device based on the identification information of the first multicast/broadcast service and the first information element and/or the cause value of the third message.

In a possible implementation, the third message is a PDU session context update request. For example, the session management function network element may receive a PDU session context update request sent by an access and mobility management function network element.

In a possible implementation, the method further includes: When the terminal device is the last terminal device that leaves the first multicast/broadcast service via the session management function network element, the session management function network element sends a fourth message to a user plane function network element, where the fourth message is used to release a transmission tunnel between the user plane function network element and a service source of the first multicast/broadcast service. In this way, transmission resources between the user plane function network element and the service source of the first multicast/broadcast service can be saved.

In a possible implementation, the method further includes: The session management function network element sends a fifth message to a multicast/broadcast control plane function network element, where the fifth message carries the identification information of the first multicast/broadcast service. The fifth message is used to notify the multicast/broadcast control plane function network element that the terminal device is to leave the first multicast/broadcast service.

In a possible implementation, the fifth message further includes one or more of the following: the identifier of the terminal device, an identifier of the session management function network element, an identifier of an access network device accessed by the terminal device, and an identifier of the user plane function network element corresponding to the first multicast/broadcast service.

In a possible implementation, the method further includes: The session management function network element sends a sixth message, where the sixth message carries the identification information of the first multicast/broadcast service. For example, the session management function network element may send the sixth message to the access network device via the access and mobility management function network element, where the sixth message is used to notify the access network device that the terminal device is to leave the first multicast/broadcast service.

In a possible implementation, the sixth message further carries the first information element and/or a cause value of the sixth message, where the first information element indicates that the operation type corresponding to the first multicast/broadcast service is leave, and the cause value of the sixth message represents that the terminal device is to leave the first multicast/broadcast service.

According to a third aspect, an embodiment of this application provides a multicast/broadcast service communication method, including: A multicast/broadcast control plane function network element receives a seventh message, where the seventh message carries identification information of a first multicast/broadcast service, and the first multicast/broadcast service is a multicast/broadcast service that a terminal device is to leave. The multicast/broadcast control plane function network element updates a multicast/broadcast service context of the first multicast/broadcast service based on the seventh message.

Based on the method provided in this embodiment of this application, after receiving the seventh message, the multicast/broadcast control plane function network element may perform, based on the seventh message, an operation for the terminal device to leave the first multicast/broadcast service, in other words, may update the multicast/broadcast service context of the first multicast/broadcast service based on the seventh message, so that the terminal device can leave the first multicast/broadcast service. After the terminal device leaves the first multicast/broadcast service, a network may release a corresponding network resource, thereby reducing network resource overheads.

In a possible implementation, the multicast/broadcast service context of the first multicast/broadcast service includes: the identification information of the first multicast/broadcast service, an identifier of a session management function network element corresponding to the first multicast/broadcast service, and identifiers and a quantity of terminal devices that join the first multicast/broadcast service via the session management function network element; the identification information of the first multicast/broadcast service, an identifier of an access network device corresponding to the first multicast/broadcast service, and identifiers and a quantity of terminal devices that join the first multicast/broadcast service via the access network device; the identification information of the first multicast/broadcast service, an identifier of a user plane function network element corresponding to the first multicast/broadcast service, and identifiers and a quantity of terminal devices that join the first multicast/broadcast service via the user plane function network element; the identification information of the first multicast/broadcast service and an identifier of a session management function network element corresponding to the first multicast/broadcast service; the identification information of the first multicast/broadcast service and an identifier of an access network device corresponding to the first multicast/broadcast service; or the identification information of the first multicast/broadcast service and an identifier of a user plane function network element corresponding to the first multicast/broadcast service.

In a possible implementation, that the multicast/broadcast control plane function network element updates a multicast/broadcast service context of the first multicast/broadcast service includes: when the multicast/broadcast service context of the first multicast/broadcast service includes the identification information of the first multicast/broadcast service, the identifier of the session management function network element corresponding to the first multicast/broadcast service, and the identifiers and the quantity of terminal devices that join the first multicast/broadcast service via the session management function network element, and when the terminal device joins the first multicast/broadcast service via a first session management function network element in the session management function network element, deleting the terminal device from terminal devices that join the first multicast/broadcast service via the first session management function network element, and updating a quantity of terminal devices that join the first multicast/broadcast service via the first session management function network element; when the multicast/broadcast service context of the first multicast/broadcast service includes the identification information of the first multicast/broadcast service, the identifier of the access network device corresponding to the first multicast/broadcast service, and the identifiers and the quantity of terminal devices that join the first multicast/broadcast service via the access network device, and when the terminal device joins the first multicast/broadcast service via a first access network device in the access network device, deleting the terminal device from terminal devices that join the first multicast/broadcast service via the first access network device, and updating a quantity of terminal devices that join the first multicast/broadcast service via the first access network device; when the multicast/broadcast service context of the first multicast/broadcast service includes the identification information of the first multicast/broadcast service, the identifier of the user plane function network element corresponding to the first multicast/broadcast service, and the identifiers and the quantity of terminal devices that join the first multicast/broadcast service via the user plane function network element, and when the terminal device joins the first multicast/broadcast service via a first user plane function network element in the user plane function network element, deleting the terminal device from terminal devices that join the first multicast/broadcast service via the first user plane function network element, and updating a quantity of terminal devices that join the first multicast/broadcast service via the first user plane function network element; when the multicast/broadcast service context of the first multicast/broadcast service includes the identification information of the first multicast/broadcast service and the identifier of the session management function network element corresponding to the first multicast/broadcast service, and when the terminal device is the last terminal device that leaves the first multicast/broadcast service via a first session management function network element in the session management function network element, deleting an identifier of the first session management function network element from the multicast/broadcast service context; when the multicast/broadcast service context of the first multicast/broadcast service includes the identification information of the first multicast/broadcast service and the identifier of the access network device corresponding to the first multicast/broadcast service, and when the terminal device is the last terminal device that leaves the first multicast/broadcast service via a first access network device in the access network device, deleting an identifier of the first access network device from the multicast/broadcast service context; or when the multicast/broadcast service context of the first multicast/broadcast service includes the identification information of the first multicast/broadcast service and the identifier of the user plane function network element corresponding to the first multicast/broadcast service, and when the terminal device is the last terminal device that leaves the first multicast/broadcast service via a first user plane function network element in the user plane function network element, deleting an identifier of the first user plane function network element from the multicast/broadcast service context. That is, the session management function network element may update the multicast/broadcast service context of the first multicast/broadcast service at a granularity of a terminal device, or may update the multicast/broadcast service context of the first multicast/broadcast service at a granularity of a network element (for example, an access and mobility management function network element/a session management function network element/a user plane function network element).

In a possible implementation, the seventh message further carries a first information element and/or a cause value of the seventh message, where the first information element indicates that an operation type corresponding to the first multicast/broadcast service is leave, and the cause value of the seventh message represents that the terminal device is to leave the first multicast/broadcast service. The multicast/broadcast control plane function network element may update the multicast/broadcast service context of the first multicast/broadcast service based on the identification information of the first multicast/broadcast service, the first information element, and/or the cause value of the seventh message.

In a possible implementation, the seventh message further includes one or more of the following: an identifier of the terminal device, an identifier of a session management function network element corresponding to a first PDU session, the identifier of the access network device accessed by the terminal device, and the identifier of the user plane function network element corresponding to the first multicast/broadcast service, where the first PDU session is a PDU session that is in a PDU session of the terminal device and that is associated with the first multicast/broadcast service.

According to a fourth aspect, an embodiment of this application provides a multicast/broadcast service communication method, including: An access network device receives an eighth message, where the eighth message carries identification information of a first multicast/broadcast service, and the first multicast/broadcast service is a multicast/broadcast service that a terminal device is to leave. The access network device releases an air interface resource that is allocated to the terminal device for the first multicast/broadcast service.

Based on the method provided in this embodiment of this application, after receiving the eighth message, the access network device may perform, based on the eighth message, an operation for the terminal device to leave the first multicast/broadcast service, in other words, may release, based on the eighth message, the air interface resource that is allocated to the terminal device for the first multicast/broadcast service, so that the terminal device can leave the first multicast/broadcast service. After the terminal device leaves the first multicast/broadcast service, a network may release a corresponding network resource, thereby reducing network resource overheads.

In a possible implementation, the method further includes: When the terminal device is the last terminal device that leaves the first multicast/broadcast service via the access network device, the access network device releases a service data transmission tunnel between the access network device and a core network device for the first multicast/broadcast service. In this way, transmission resources between the access network device and the core network device can be saved.

In a possible implementation, the method further includes: The access network device sends a PDU session modification request message to a session management function network element corresponding to a first PDU session, where the PDU session modification request message carries the identification information of the first multicast/broadcast service, and the first PDU session is a PDU session that is in a PDU session of the terminal device and that is associated with the first multicast/broadcast service.

In a possible implementation, the PDU session modification request message further carries a first information element and/or a cause value of the PDU session modification request message, where the first information element indicates that an operation type corresponding to the first multicast/broadcast service is leave, and the cause value of the PDU session modification request message represents that the terminal device is to leave the first multicast/broadcast service.

According to a fifth aspect, an embodiment of this application provides a communication apparatus, including: a processing unit, configured to determine a first multicast/broadcast service, where the first multicast/broadcast service is a multicast/broadcast service that a terminal device is to leave; and a sending unit, configured to send a first message, where the first message carries identification information of the first multicast/broadcast service.

In a possible implementation, the communication apparatus further includes a receiving unit, configured to receive a second message, where the second message carries information indicating that the terminal device has left the first multicast/broadcast service, or the second message carries identification information of a multicast/broadcast service that the terminal device has left.

In a possible implementation, the first message further carries a first information element and/or a cause value of the first message, where the first information element indicates that an operation type corresponding to the first multicast/broadcast service is leave, and the cause value of the first message represents that the terminal device is to leave the first multicast/broadcast service.

In a possible implementation, the first message is a protocol data unit PDU session modification request message, a PDU session release request message, a radio resource control RRC message, or a hypertext transfer protocol HTTP message.

In a possible implementation, the second message is a radio resource control RRC message or a hypertext transfer protocol HTTP message.

According to a sixth aspect, an embodiment of this application provides a communication apparatus, including: a receiving unit, configured to receive a third message, where the third message carries identification information of a first multicast/broadcast service, and the first multicast/broadcast service is a multicast/broadcast service that a terminal device is to leave; and a processing unit, configured to update a protocol data unit PDU session context of the terminal device based on the third message.

In a possible implementation, the processing unit is configured to delete the identification information of the first multicast/broadcast service from the PDU session context of the terminal device.

In a possible implementation, the processing unit is further configured to: delete, based on the third message from a context corresponding to the first multicast/broadcast service, an identifier of the terminal device and/or a session management context identifier of a PDU session associated with the first multicast/broadcast service.

In a possible implementation, the processing unit is further configured to release, from the session management context of a PDU session of the terminal device, unicast quality of service QoS information corresponding to the first multicast/broadcast service.

In a possible implementation, the third message further carries a first information element and/or a cause value of the third message, where the first information element indicates that an operation type corresponding to the first multicast/broadcast service is leave, and the cause value of the third message represents that the terminal device is to leave the first multicast/broadcast service.

In a possible implementation, the third message is a PDU session context update request.

In a possible implementation, the communication apparatus further includes a sending unit, configured to: when the terminal device is the last terminal device that leaves the first multicast/broadcast service via a session management function network element, send a fourth message to a user plane function network element, where the fourth message is used to release a transmission tunnel between the user plane function network element and a service source of the first multicast/broadcast service.

In a possible implementation, the communication apparatus further includes the sending unit, configured to: send a fifth message to a multicast/broadcast control plane function network element, where the fifth message carries the identification information of the first multicast/broadcast service.

In a possible implementation, the fifth message further includes one or more of the following: the identifier of the terminal device, an identifier of the session management function network element, an identifier of an access network device accessed by the terminal device, and an identifier of the user plane function network element corresponding to the first multicast/broadcast service.

In a possible implementation, the communication apparatus further includes the sending unit, configured to: send a sixth message, where the sixth message carries the identification information of the first multicast/broadcast service.

In a possible implementation, the sixth message further carries the first information element and/or a cause value of the sixth message, where the first information element indicates that the operation type corresponding to the first multicast/broadcast service is leave, and the cause value of the sixth message represents that the terminal device is to leave the first multicast/broadcast service.

According to a seventh aspect, an embodiment of this application provides a communication apparatus, including: a receiving unit, configured to receive a seventh message, where the seventh message carries identification information of a first multicast/broadcast service, and the first multicast/broadcast service is a multicast/broadcast service that a terminal device is to leave; and a processing unit, configured to update a multicast/broadcast service context of the first multicast/broadcast service based on the seventh message.

In a possible implementation, the multicast/broadcast service context of the first multicast/broadcast service includes: the identification information of the first multicast/broadcast service, an identifier of a session management function network element corresponding to the first multicast/broadcast service, and identifiers and a quantity of terminal devices that join the first multicast/broadcast service via the session management function network element; the identification information of the first multicast/broadcast service, an identifier of an access network device corresponding to the first multicast/broadcast service, and identifiers and a quantity of terminal devices that join the first multicast/broadcast service via the access network device; the identification information of the first multicast/broadcast service, an identifier of a user plane function network element corresponding to the first multicast/broadcast service, and identifiers and a quantity of terminal devices that join the first multicast/broadcast service via the user plane function network element; the identification information of the first multicast/broadcast service and an identifier of a session management function network element corresponding to the first multicast/broadcast service; the identification information of the first multicast/broadcast service and an identifier of an access network device corresponding to the first multicast/broadcast service; or the identification information of the first multicast/broadcast service and an identifier of a user plane function network element corresponding to the first multicast/broadcast service.

In a possible implementation, the processing unit is configured to: when the multicast/broadcast service context of the first multicast/broadcast service includes the identification information of the first multicast/broadcast service, the identifier of the session management function network element corresponding to the first multicast/broadcast service, and the identifiers and the quantity of terminal devices that join the first multicast/broadcast service via the session management function network element, and when the terminal device joins the first multicast/broadcast service via a first session management function network element in the session management function network element, delete the terminal device from terminal devices that join the first multicast/broadcast service via the first session management function network element, and update a quantity of terminal devices that join the first multicast/broadcast service via the first session management function network element; when the multicast/broadcast service context of the first multicast/broadcast service includes the identification information of the first multicast/broadcast service, the identifier of the access network device corresponding to the first multicast/broadcast service, and the identifiers and the quantity of terminal devices that join the first multicast/broadcast service via the access network device, and when the terminal device joins the first multicast/broadcast service via a first access network device in the access network device, delete the terminal device from terminal devices that join the first multicast/broadcast service via the first access network device, and update a quantity of terminal devices that join the first multicast/broadcast service via the first access network device; when the multicast/broadcast service context of the first multicast/broadcast service includes the identification information of the first multicast/broadcast service, the identifier of the user plane function network element corresponding to the first multicast/broadcast service, and the identifiers and the quantity of terminal devices that join the first multicast/broadcast service via the user plane function network element, and when the terminal device joins the first multicast/broadcast service via a first user plane function network element in the user plane function network element, delete the terminal device from terminal devices that join the first multicast/broadcast service via the first user plane function network element, and update a quantity of terminal devices that join the first multicast/broadcast service via the first user plane function network element; when the multicast/broadcast service context of the first multicast/broadcast service includes the identification information of the first multicast/broadcast service and the identifier of the session management function network element corresponding to the first multicast/broadcast service, and when the terminal device is the last terminal device that leaves the first multicast/broadcast service via a first session management function network element in the session management function network element, delete an identifier of the first session management function network element from the multicast/broadcast service context; when the multicast/broadcast service context of the first multicast/broadcast service includes the identification information of the first multicast/broadcast service and the identifier of the access network device corresponding to the first multicast/broadcast service, and when the terminal device is the last terminal device that leaves the first multicast/broadcast service via a first access network device in the access network device, delete an identifier of the first access network device from the multicast/broadcast service context; or when the multicast/broadcast service context of the first multicast/broadcast service includes the identification information of the first multicast/broadcast service and the identifier of the user plane function network element corresponding to the first multicast/broadcast service, and when the terminal device is the last terminal device that leaves the first multicast/broadcast service via a first user plane function network element in the user plane function network element, delete an identifier of the first user plane function network element from the multicast/broadcast service context.

In a possible implementation, the seventh message further carries a first information element and/or a cause value of the seventh message, where the first information element indicates that an operation type corresponding to the first multicast/broadcast service is leave, and the cause value of the seventh message represents that the terminal device is to leave the first multicast/broadcast service.

In a possible implementation, the seventh message further includes one or more of the following: an identifier of the terminal device, an identifier of a session management function network element corresponding to a first PDU session, the identifier of the access network device accessed by the terminal device, and the identifier of the user plane function network element corresponding to the first multicast/broadcast service, where the first PDU session is a PDU session that is in a PDU session of the terminal device and that is associated with the first multicast/broadcast service.

According to an eighth aspect, an embodiment of this application provides a communication apparatus, including: a receiving unit, configured to receive an eighth message, where the eighth message carries identification information of a first multicast/broadcast service, and the first multicast/broadcast service is a multicast/broadcast service that a terminal device is to leave; and a processing unit, configured to release an air interface resource that is allocated to the terminal device for the first multicast/broadcast service.

In a possible implementation, the processing unit is further configured to: when the terminal device is the last terminal device that leaves the first multicast/broadcast service via an access network device, release a service data transmission tunnel between the access network device and a core network device for the first multicast/broadcast service.

In a possible implementation, the communication apparatus further includes a sending unit, configured to: send a PDU session modification request message to a session management function network element corresponding to a first PDU session, where the PDU session modification request message carries the identification information of the first multicast/broadcast service, and the first PDU session is a PDU session that is in a PDU session of the terminal device and that is associated with the first multicast/broadcast service.

In a possible implementation, the PDU session modification request message further carries a first information element and/or a cause value of the PDU session modification request message. The first information element indicates that an operation type corresponding to the first multicast/broadcast service is leave, and the cause value of the PDU session modification request message represents that the terminal device is to leave the first multicast/broadcast service.

According to a ninth aspect, this application provides a multicast/broadcast service communication method, including: A session management function network element receives a third message, where the third message carries identification information of a first multicast/broadcast service, and the first multicast/broadcast service is a multicast/broadcast service that a terminal device is to leave. The session management function network element receives a fourteenth message, where the fourteenth message carries identification information of a protocol data unit PDU session associated with the first multicast/broadcast service. The session management function network element updates a session management context of a PDU session of the terminal device based on the fourteenth message.

In a possible implementation, that the session management function network element updates a session management context of a protocol data unit PDU session of the terminal device based on the fourteenth message includes: The session management function network element deletes the identification information of the first multicast/broadcast service from the session management context of the PDU session of the terminal device.

In a possible implementation, the method further includes: The session management function network element deletes an identifier of the terminal device and/or a session management context identifier of the PDU session from a context corresponding to the first multicast/broadcast service.

In a possible implementation, the method further includes: The session management function network element releases, from the session management context of the PDU session of the terminal device, unicast quality of service QoS information corresponding to the first multicast/broadcast service.

According to a tenth aspect, this application provides a communication apparatus, including: a receiving unit, configured to receive a third message, where the third message carries identification information of a first multicast/broadcast service, and the first multicast/broadcast service is a multicast/broadcast service that a terminal device is to leave, where the receiving unit is further configured to receive a fourteenth message, where the fourteenth message carries identification information of a protocol data unit PDU session associated with the first multicast/broadcast service; and a processing unit, configured to update a session management context of a PDU session of the terminal device based on the fourteenth message.

In a possible implementation, the processing unit is configured to delete the identification information of the first multicast/broadcast service from the session management context of the PDU session of the terminal device.

In a possible implementation, the processing unit is further configured to: delete an identifier of the terminal device and/or a session management context identifier of the PDU session from a context corresponding to the first multicast/broadcast service.

In a possible implementation, the processing unit is further configured to release, from the session management context of the PDU session of the terminal device, unicast quality of service QoS information corresponding to the first multicast/broadcast service.

According to an eleventh aspect, this application further provides a communication apparatus. The communication apparatus may be a terminal device or a chip. The communication apparatus includes a processor, configured to implement any multicast/broadcast service communication method provided in the first aspect. The communication apparatus may further include a memory, configured to store program instructions and data. The memory may be a memory integrated into the communication apparatus, or an off-chip memory disposed outside the communication apparatus. The memory is coupled to the processor, and the processor may invoke and execute program instructions stored in the memory, to implement any multicast/broadcast service communication method provided in the first aspect. The memory may be disposed in the processor, or the memory and the processor are independently disposed. The communication apparatus may further include a transceiver (communication interface). The transceiver is used by the communication apparatus to communicate with another device (for example, an access network device).

According to a twelfth aspect, this application further provides a communication apparatus. The communication apparatus may be a session management function network element or a chip. The communication apparatus includes a processor, configured to implement any multicast/broadcast service communication method provided in the second aspect or the ninth aspect. The communication apparatus may further include a memory, configured to store program instructions and data. The memory may be a memory integrated into the communication apparatus, or an off-chip memory disposed outside the communication apparatus. The memory is coupled to the processor, and the processor may invoke and execute program instructions stored in the memory, to implement any multicast/broadcast service communication method provided in the second aspect or the ninth aspect. The memory may be disposed in the processor, or the memory and the processor are independently disposed. The communication apparatus may further include a transceiver (communication interface). The transceiver is used by the communication apparatus to communicate with another device (for example, a multicast/broadcast control plane function network element).

According to a thirteenth aspect, this application further provides a communication apparatus. The communication apparatus may be a multicast/broadcast control plane function network element or a chip. The communication apparatus includes a processor, configured to implement any multicast/broadcast service communication method provided in the third aspect. The communication apparatus may further include a memory, configured to store program instructions and data. The memory may be a memory integrated into the communication apparatus, or an off-chip memory disposed outside the communication apparatus. The memory is coupled to the processor, and the processor may invoke and execute program instructions stored in the memory, to implement any multicast/broadcast service communication method provided in the third aspect. The memory may be disposed in the processor, or the memory and the processor are independently disposed. The communication apparatus may further include a transceiver (communication interface). The transceiver is used by the communication apparatus to communicate with another device (for example, a session management function network element).

According to a fourteenth aspect, this application further provides a communication apparatus. The communication apparatus may be an access network device or a chip. The communication apparatus includes a processor, configured to implement any multicast/broadcast service communication method provided in the fourth aspect. The communication apparatus may further include a memory, configured to store program instructions and data. The memory may be a memory integrated into the communication apparatus, or an off-chip memory disposed outside the communication apparatus. The memory is coupled to the processor, and the processor may invoke and execute program instructions stored in the memory, to implement any multicast/broadcast service communication method provided in the fourth aspect. The memory may be disposed in the processor, or the memory and the processor are independently disposed. The communication apparatus may further include a transceiver (communication interface). The transceiver is used by the communication apparatus to communicate with another device (for example, a terminal device).

According to a fifteenth aspect, this application provides a computer-readable storage medium, including instructions. When the instructions are run on a computer, the computer is enabled to perform any multicast/broadcast service communication method provided in any one of the foregoing aspects.

According to a sixteenth aspect, this application provides a computer program product including instructions. When the computer program product runs on a computer, the computer is enabled to perform any multicast/broadcast service communication method provided in any one of the foregoing aspects.

According to a seventeenth aspect, this application provides a chip system. The chip system includes a processor, and may further include a memory, configured to implement any multicast/broadcast service communication method provided in any one of the foregoing aspects. The chip system may include a chip, or may include a chip and another discrete component.

According to an eighteenth aspect, this application provides a multicast/broadcast service communication system. The system includes the communication apparatuses in the fifth aspect to the eighth aspect, or the system includes the communication apparatuses in the fifth aspect, the seventh aspect, the eighth aspect, and the ninth aspect.

### BRIEF DESCRIPTION OF DRAWINGS

FIG. 1 is a schematic diagram of a system architecture to which a multicast/broadcast service communication method is applicable according to an embodiment of this application;
FIG. 2a is a schematic diagram of a system architecture to which another multicast/broadcast service communication method is applicable according to an embodiment of this application;
FIG. 2b is a schematic diagram of a system architecture to which still another multicast/broadcast service communication method is applicable according to an embodiment of this application;
FIG. 3a is a schematic diagram of an applicable scenario of a multicast/broadcast service communication method according to an embodiment of this application;
FIG. 3b is a schematic diagram of a multicast/broadcast service transmission manner according to an embodiment of this application;
FIG. 4 is a schematic diagram of an internal structure of a terminal device, a session management function network element, a multicast/broadcast control plane function network element, or an access network device according to an embodiment of this application;

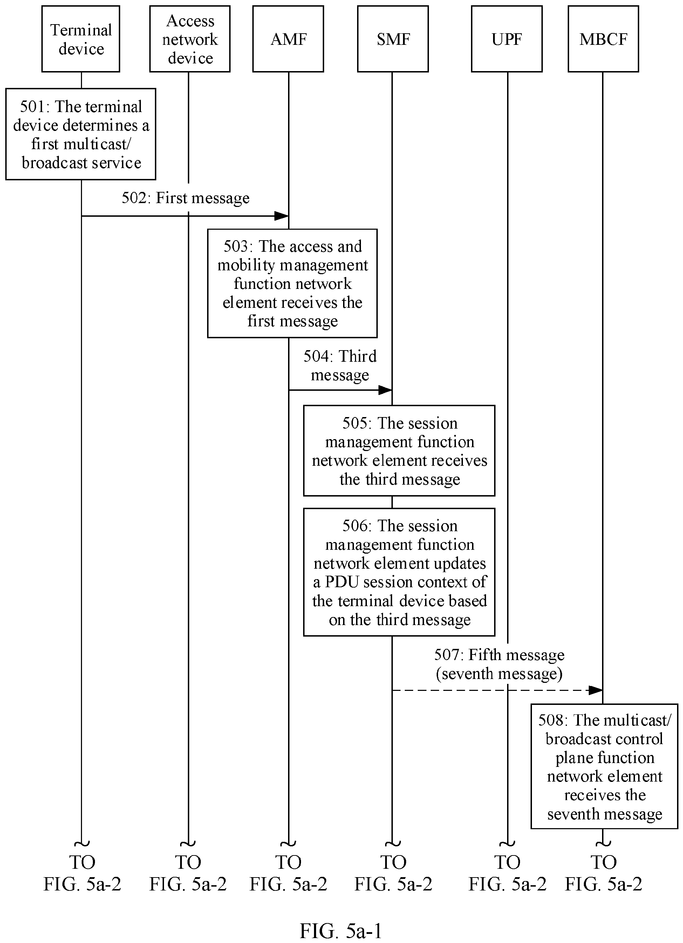

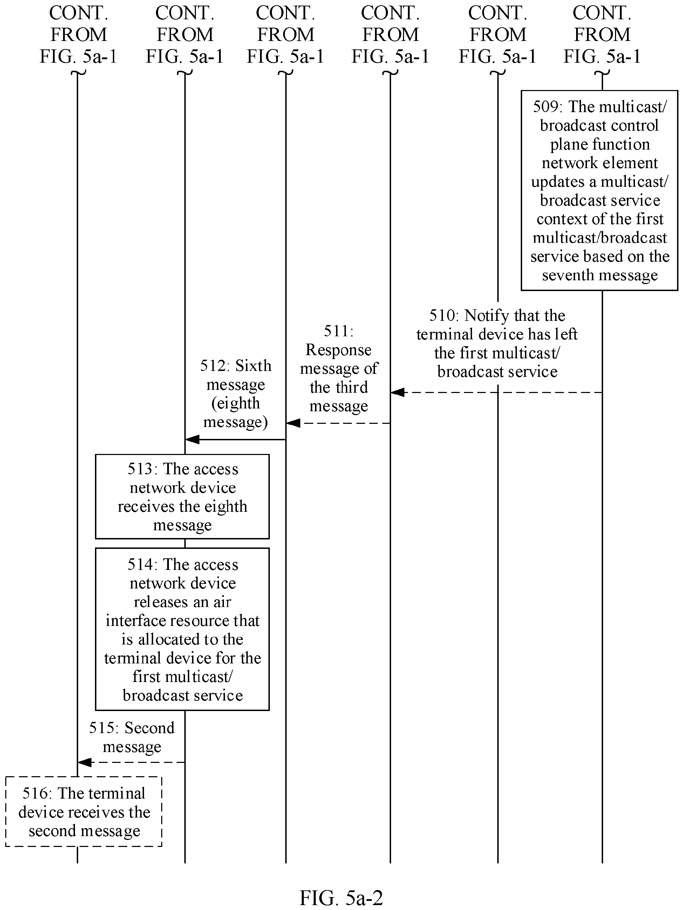

FIG. 5a-1 and FIG. 5a-2 are a schematic diagram of signal interaction to which a multicast/broadcast service communication method is applicable according to an embodiment of this application;

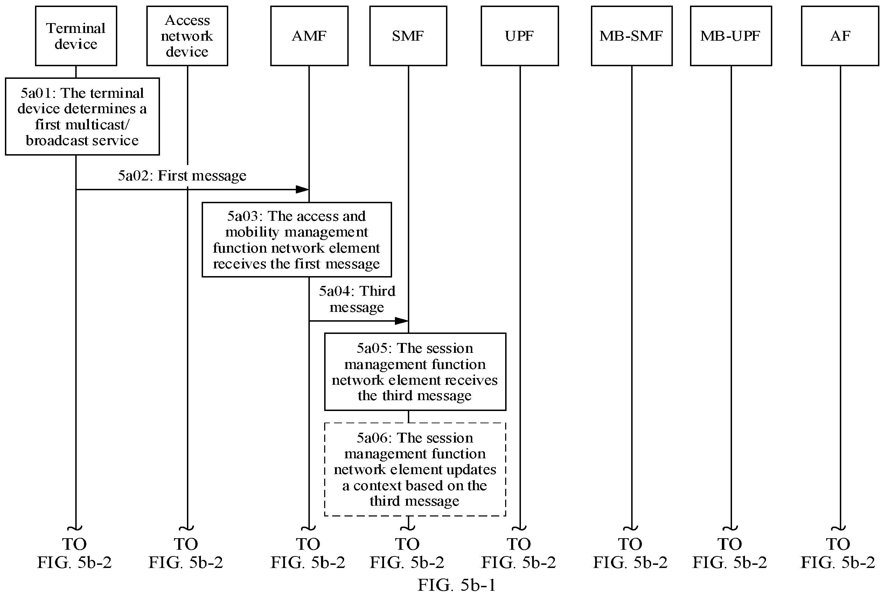

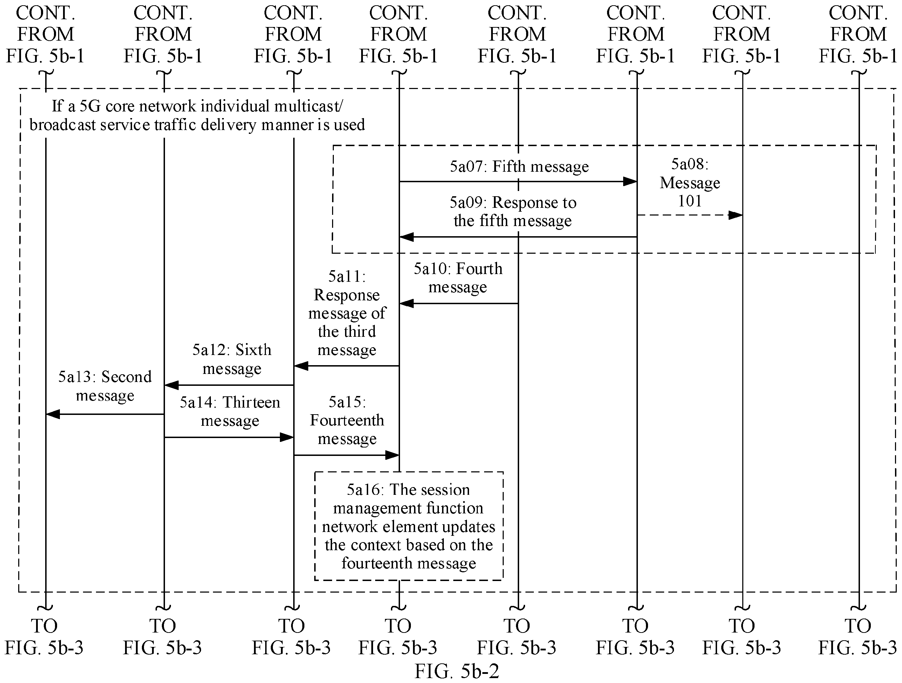

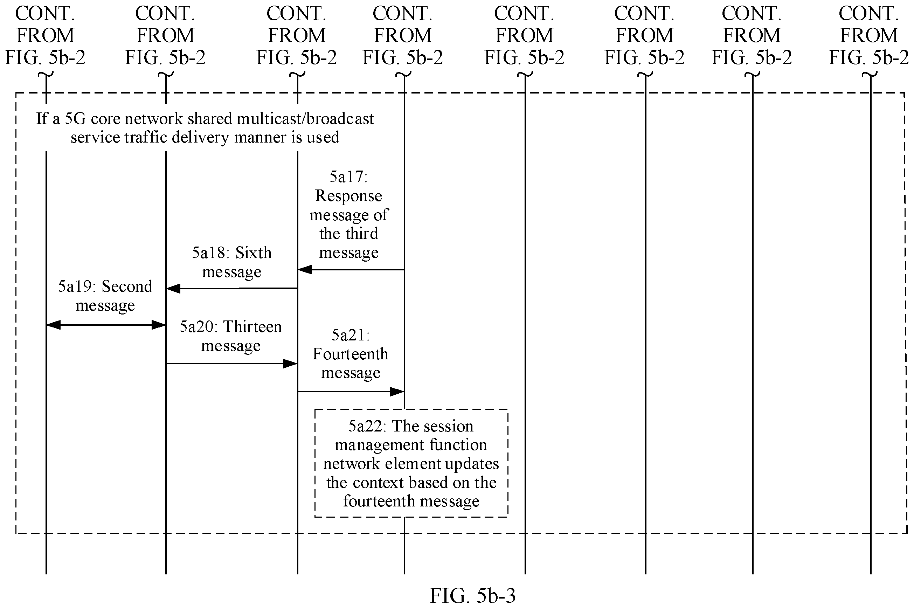

FIG. 5b-1 to FIG. 5b-3 are a schematic diagram of signal interaction to which a multicast/broadcast service communication method is applicable according to an embodiment of this application;

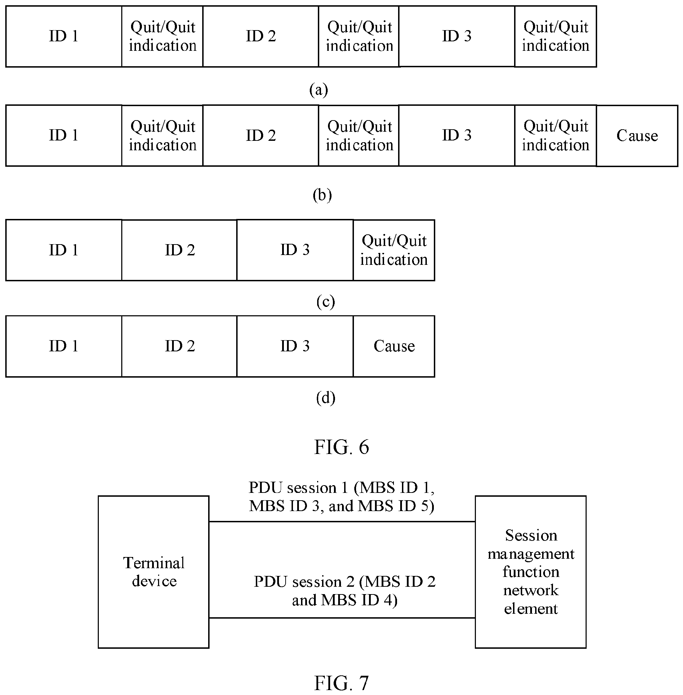

FIG. 6 is a schematic diagram of a first information element corresponding to an identifier of a multicast/broadcast service according to an embodiment of this application;
FIG. 7 is a schematic diagram of an association relationship between a PDU session and a multicast/broadcast service according to an embodiment of this application;

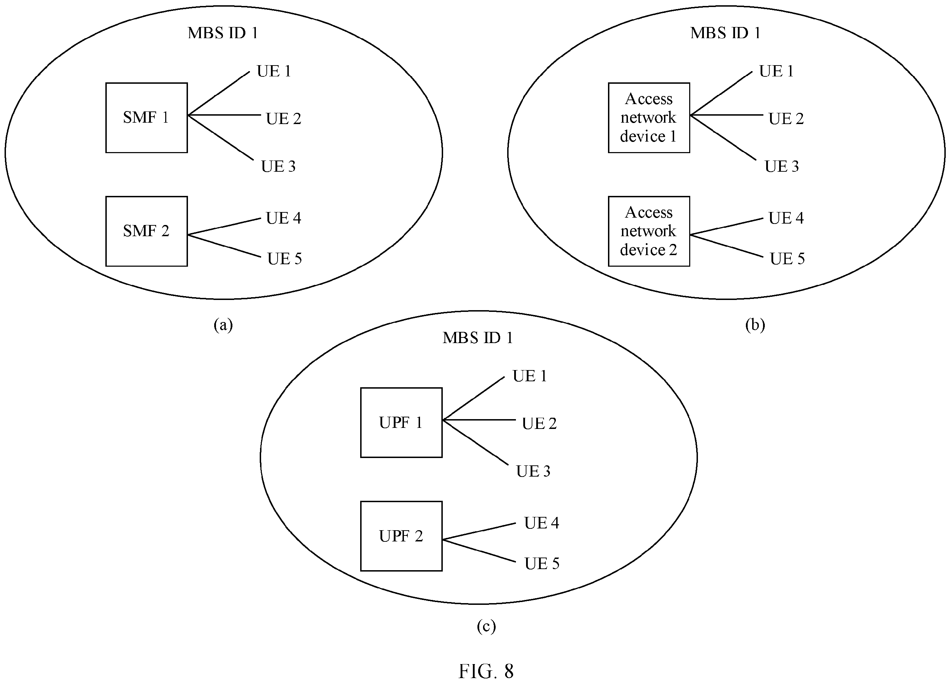

FIG. 8 is a schematic diagram of a context of a multicast/broadcast service according to an embodiment of this application;

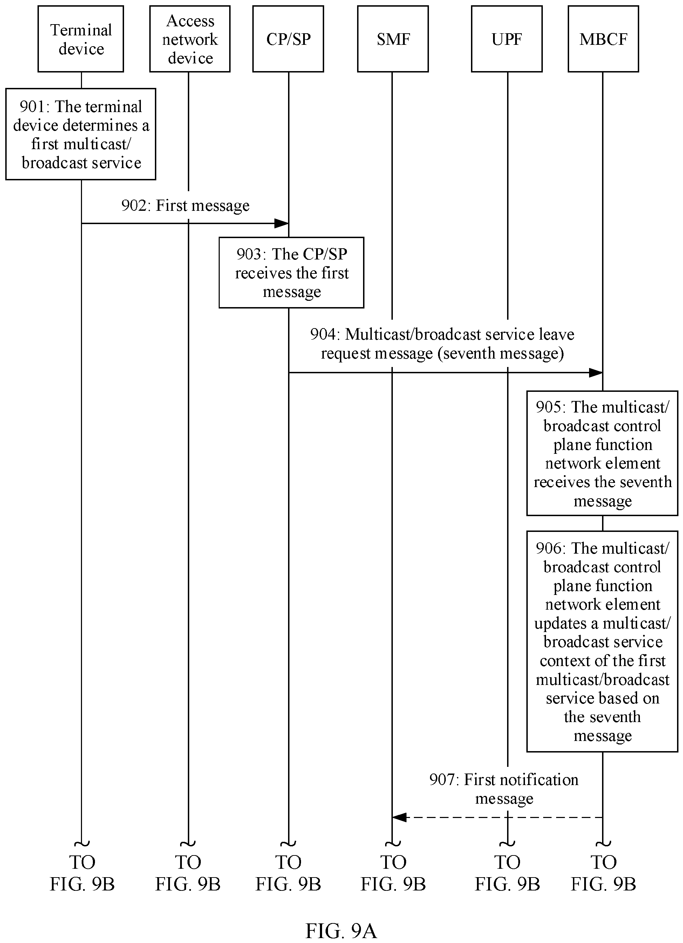

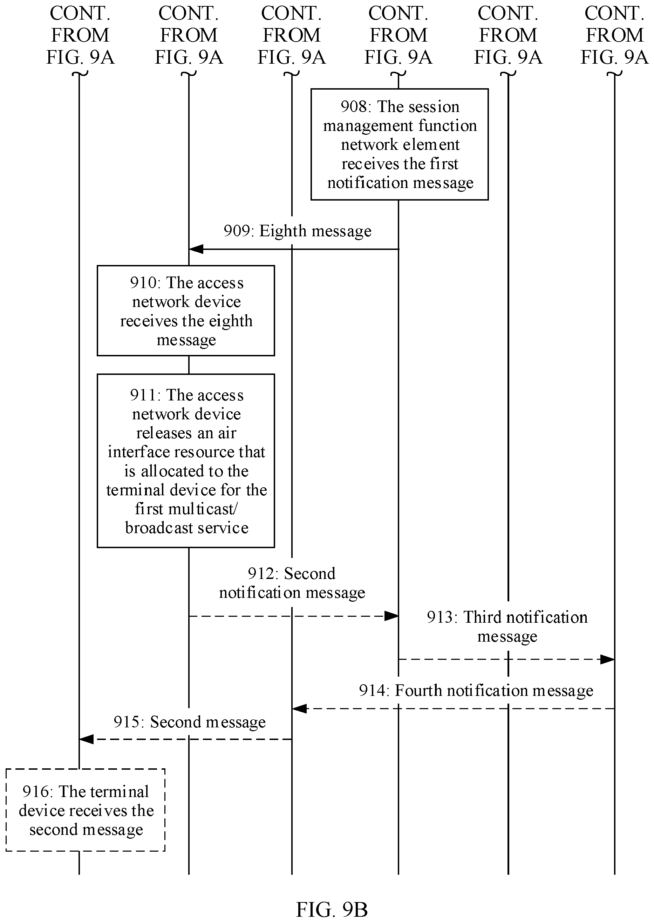

FIG. 9A and FIG. 9B are a schematic diagram of signal interaction to which another multicast/broadcast service communication method is applicable according to an embodiment of this application;

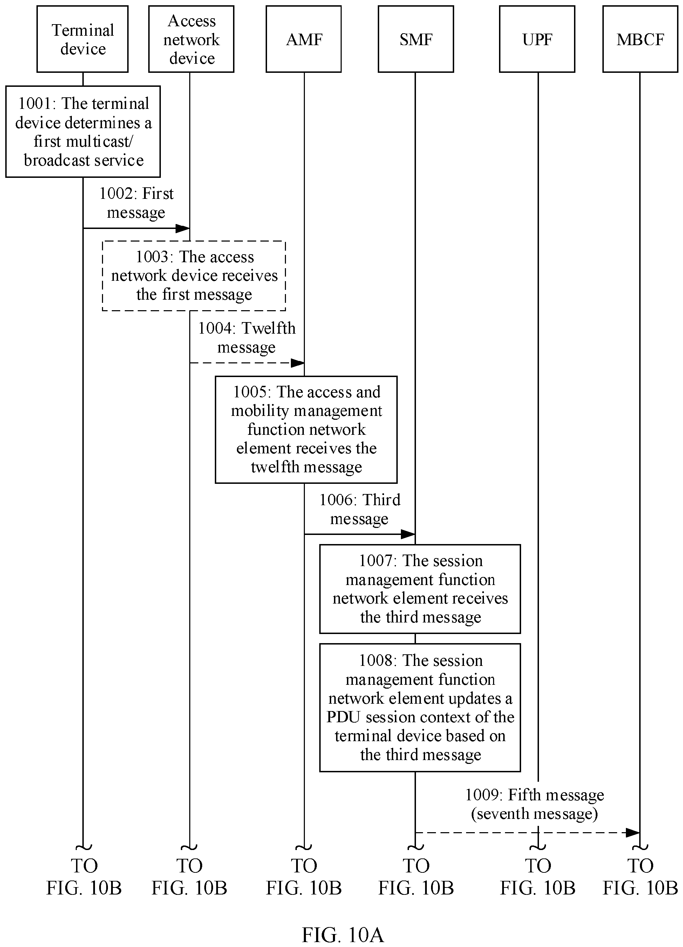

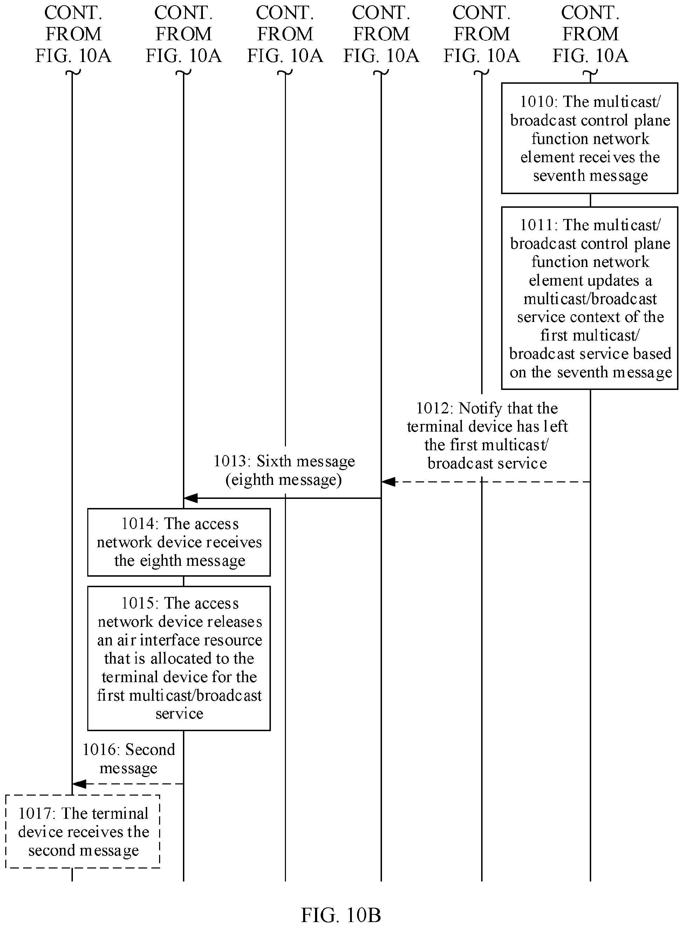

FIG. 10A and FIG. 10B are a schematic diagram of signal interaction to which still another multicast/broadcast service communication method is applicable according to an embodiment of this application;

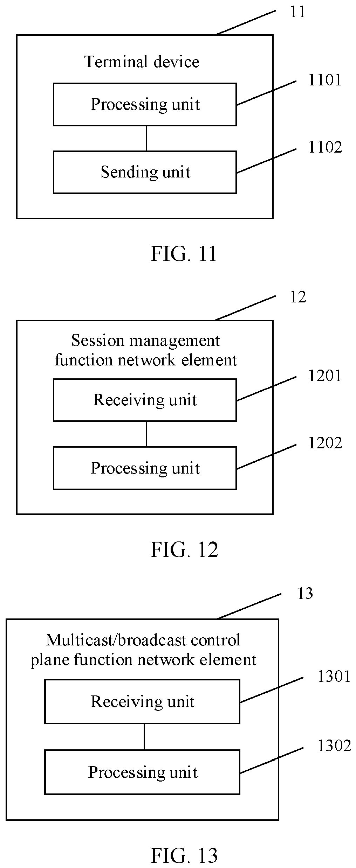

FIG. 11 is a schematic diagram of a structure of a terminal device according to an embodiment of this application;
FIG. 12 is a schematic diagram of a structure of a session management function network element according to an embodiment of this application;
FIG. 13 is a schematic diagram of a structure of a multicast/broadcast control plane function network element according to an embodiment of this application; and

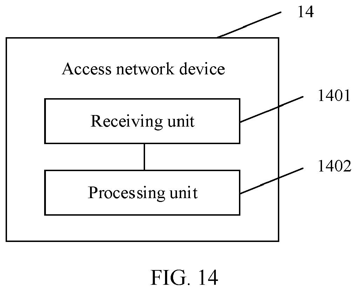

FIG. 14 is a schematic diagram of a structure of an access network device according to an embodiment of this application.

### DESCRIPTION OF EMBODIMENTS

Embodiments of this application provide a multicast/broadcast service communication method and an apparatus, and may be applied to a 5G mobile communication system, a new radio (new radio, NR), or the like. The technical solutions provided in this application may be further applied to a future communication system, for example, a sixth-generation mobile communication system. The communication system may be a future evolved public land mobile network (public land mobile network, PLMN), a device to device (device to device, D2D) network, a machine to machine (machine to machine, M2M) network, an internet of things (internet of things, IoT) network, or another network. This is not limited in this application.

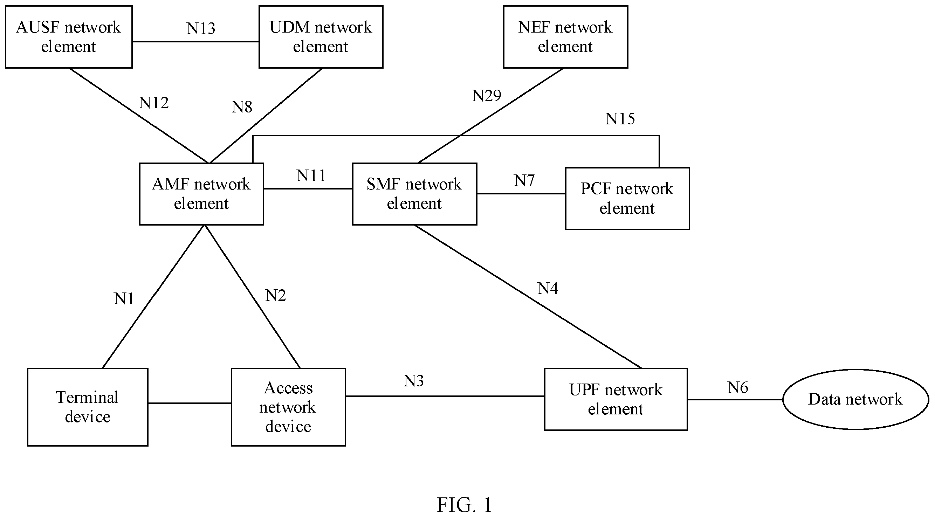

As shown in FIG. 1, a network architecture in embodiments of this application may be a 5th generation system (5th generation system, 5GS). The 5GS includes an access and mobility management function (access and mobility management function, AMF) network element, a session management function (session management function, SMF) network element, a user plane function (user plane function, UPF) network element, a unified data management (unified data management, UDM) network element, a policy control function (policy control function, PCF) network element, an authentication server function (authentication server function, AUSF) network element, a network exposure function (network exposure function, NEF) network element, and some network elements that are not shown, for example, a network repository function (network repository function, NRF) network element. A network element in the 5GS may also be referred to as a 5G core network element.

An AMF is responsible for an access and mobility management function. The AMF may receive non-access stratum (non-access stratum, NAS) signaling (including session management (session management, SM) signaling) of a terminal device and related signaling of an access network device, to complete a user registration procedure, SM signaling forwarding, and mobility management.

An SMF is responsible for a session management function and completes procedures related to a PDU session, for example, establishment, release, and an update.

A PCF is responsible for user policy management, including both a mobility-related policy and a PDU session-related policy, such as a quality of service (quality of service, QoS) policy and a charging policy.

A UDM stores subscription data of a user. An AUSF is an authentication and authorization service module, and is responsible for authenticating and authorizing access of the terminal device.

As shown in FIG. 1, the terminal device may access the 5GS via the access network device. The terminal device may communicate with the AMF network element through a next generation (Next generation, NG) 1 interface (N1 for short). The access network device communicates with the AMF network element through an N2 interface (N2 for short). The access network device communicates with the UPF network element through an N3 interface (N3 for short). The AMF network element communicates with the SMF network element through an N11 interface (N11 for short). The AMF network element communicates with the UDM network element through an N8 interface (N8 for short). The AMF network element communicates with the AUSF network element through an N12 interface (N12 for short). The AMF network element communicates with the PCF network element through an N15 interface (N15 for short). The SMF network element communicates with the PCF network element through an N7 interface (N7 for short). The SMF network element communicates with the UPF network element through an N4 interface (N4 for short). The NEF network element communicates with the SMF network element through an N29 interface (N29 for short). The UPF network element accesses a data network (DN) through an N6 interface (N6 for short).

Certainly, the network architecture in FIG. 1 may further include another network element, for example, a device or a network element such as a network slice selection function (network slice selection function, NSSF), a unified data repository (unified data repository, UDR), or a network storage function (network repository function, NRF). This is not specifically limited.

It should be noted that names of the network elements and the interfaces between the network elements in FIG. 1 are merely examples. In specific implementation, names of the network elements and the interfaces between the network elements may be others. This is not specifically limited in embodiments of this application.

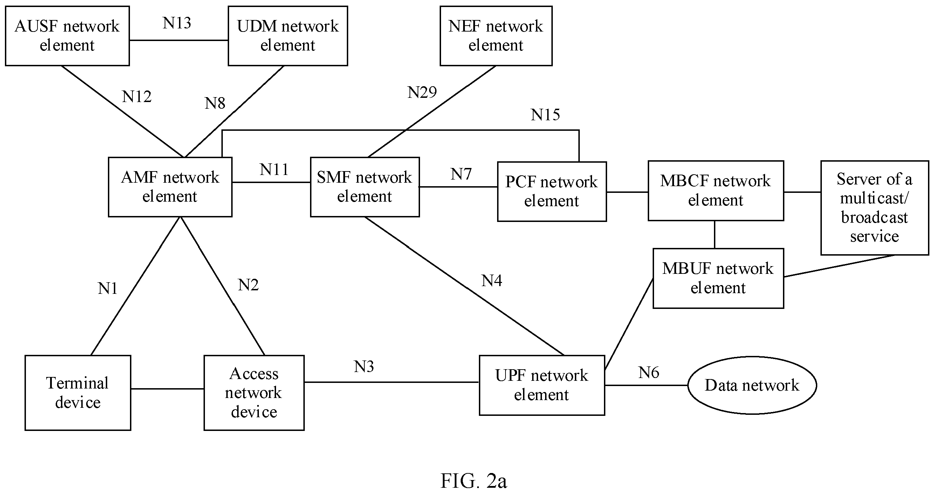

As shown in FIG. 2a, a network architecture for a multicast/broadcast service is provided. The architecture is extended based on the architecture shown in FIG. 1. For example, two functional entities, namely, a multicast/broadcast control plane function (Multicast/Broadcast Control Function, MBCF) network element and a multicast/broadcast user plane function (Multicast/Broadcast User Plane Function, MBUF) network element, are added to support a multicast/broadcast service/function.

The MBCF may implement a control plane function of the multicast/broadcast service, and is responsible for managing the multicast/broadcast service. The MBCF may be connected to a server of the multicast/broadcast service, to receive information related to the multicast/broadcast service (for example, descriptions of the multicast/broadcast service). In addition, the MBCF can be connected to the PCF to create resources for the multicast/broadcast service, for example, extract, from the PCF, policy and charging control (policy and charging control, PCC) information related to the multicast/broadcast service. The MBUF may be used to transfer service data of the multicast/broadcast service. Optionally, the MBCF may be integrated into the PCF or the SMF as a functional module, and the MBUF may be integrated into the UPF as a functional module. This is not limited in this application.

It should be noted that a name of the MBCF or the MBUF is an example. In a 5G network, the MBCF or the MBUF may have another name. This is not limited in this application.

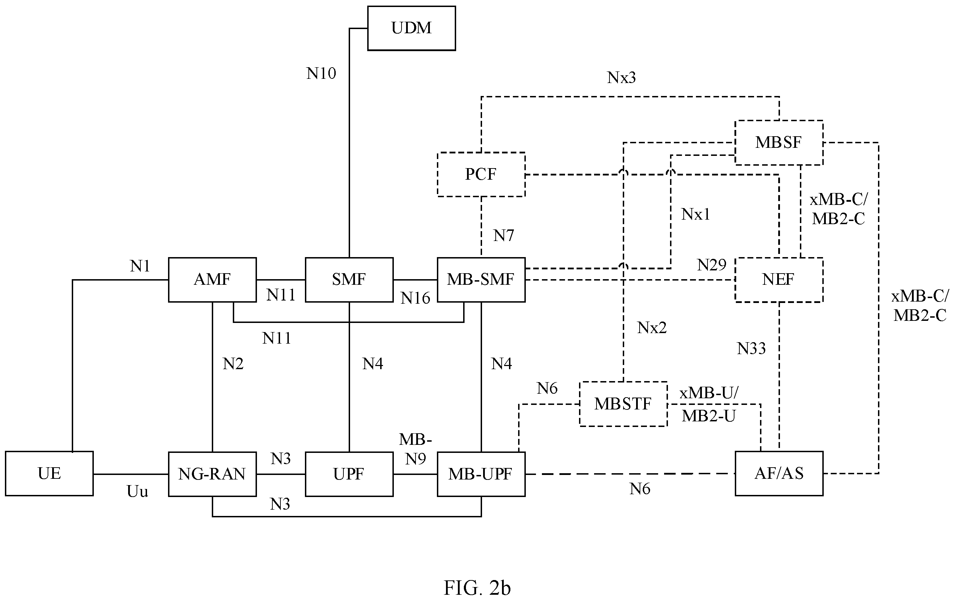

As shown in FIG. 2b, a network architecture for a multicast/broadcast service is provided. The architecture may evolve based on the architecture shown in FIG. 2a. For example, the MBUF may be replaced with a multicast/broadcast user plane function (multicast/broadcast user plane function, MB-UPF) or a multicast/broadcast service transport function (multicast/broadcast service transport function, MB STF). The MB-UPF or the MB STF may have functions of the foregoing MBUF. The MBCF may be replaced with a multicast/broadcast session management function (multicast/broadcast session management function, MB-SMF). The MB-SMF may have functions of the foregoing MBCF. The MB-SMF may be further connected to the NEF or a multicast/broadcast service function (multicast/broadcast service function, MBSF), to obtain, from the NEF or the MBSF, description information (for example, descriptions of the multicast/broadcast service) related to the multicast/broadcast service.

It should be noted that names of the foregoing network elements (for example, the MB-UPF, the MB STF, and the MB-SMF) are examples. In a 5G network, the foregoing network elements may have other names. This is not limited in this application.

For clear and brief description of the following embodiments, the following briefly describes an association relationship between a PDU session and a multicast/broadcast service.

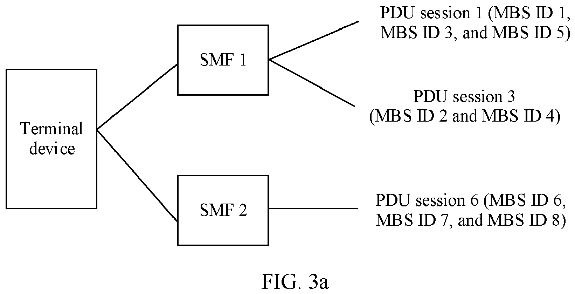

FIG. 3a is a schematic diagram of association between a PDU session and a multicast/broadcast service. UE 1 includes three PDU sessions: a PDU session 1, a PDU session 3, and a PDU session 6. The PDU session 1 and the PDU session 3 are established by an SMF 1, and the PDU session 6 is established by an SMF 2.

UE 1 joins three multicast/broadcast services based on the PDU session 1. To be specific, the PDU session 1 is associated with three multicast/broadcast services, namely, MBSs indicated by an MBS ID 1, an MBS ID 3, and an MBS ID 5. Joining a multicast/broadcast service based on a PDU session may mean joining the multicast/broadcast service via a user plane of the PDU session (for example, by using internet group management protocol (internet group management protocol, IGMP) join (Join) signaling), or may mean joining the multicast/broadcast service via a control plane of the PDU session (for example, by using NAS signaling). This is not limited in this application. That a PDU session is associated with a multicast/broadcast service may be understood as: A PDU session context of the PDU session is associated with the multicast/broadcast service. For example, the PDU session may be associated with the multicast/broadcast service by storing a multicast/broadcast service identifier in the PDU session context.

Similarly, the PDU session 3 is associated with two multicast/broadcast services, namely, multicast/broadcast services indicated by an MBS ID 2 and an MBS ID 4. The PDU session 6 is associated with three multicast/broadcast services, namely, multicast/broadcast services indicated by an MBS ID 6, an MBS ID 7, and an MBS ID 8.

The multicast/broadcast service is at a service level/granularity. To be specific, one multicast/broadcast service may correspond to a plurality of UEs, in other words, a plurality of UEs may all join a same multicast/broadcast service.

For example, as shown in FIG. 3a, the terminal device 1 may actively leave one multicast/broadcast service (for example, the multicast/broadcast service indicated by the MBS ID 1) on the PDU session 1, or may leave a plurality of multicast/broadcast services (for example, the two multicast/broadcast services indicated by the MBS ID 1 and the MBS ID 5) on the PDU session 1. After the terminal device 1 leaves the multicast/broadcast service indicated by the MBS ID 1, it indicates that the PDU session 1 is disassociated from the multicast/broadcast service indicated by the MBS ID 1. Similarly, after the terminal device 1 leaves the plurality of multicast/broadcast services associated with the PDU session 1, it indicates that the PDU session 1 is disassociated from the plurality of multicast/broadcast services.

A terminal device in embodiments of this application may include various handheld devices, vehicle-mounted devices, wearable devices, computing devices, or other processing devices connected to a wireless modem that have a wireless communication function, and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal (terminal), or relay user equipment. The relay user equipment may be, for example, a 5G residential gateway (residential gateway, RG). For ease of description, the devices mentioned above are collectively referred to as the terminal device in this application.

An access network device in embodiments of this application may be a device for accessing a core network, for example, may be a next-generation radio access network (next-generation radio access network, NG-RAN) device, a base station, a broadband network gateway (broadband network gateway, BNG), an aggregation switch, or a non-3rd Generation Partnership Project (3rd generation partnership project, 3GPP) access network device. The base station may include various forms of base stations, for example, a macro base station, a micro base station (which is also referred to as a small cell), a relay station, and an access point.

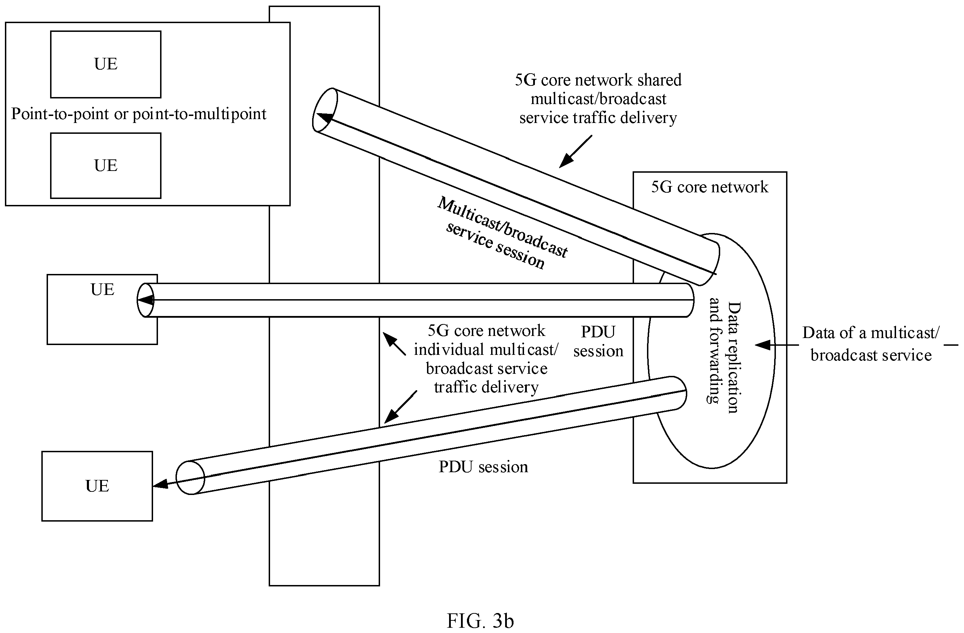

FIG. 3b is a schematic diagram of a multicast/broadcast service transmission manner. That an access network device supports a multicast/broadcast function may be understood as: The access network device supports transmission of multicast/broadcast service data in a 5G core network shared multicast/broadcast service traffic delivery (5GC Shared MBS traffic delivery) manner. For example, the multicast/broadcast service data directly arrives at a base station through a UPF and an N3 tunnel between the UPF and the base station, and the base station may send, in a point-to-point (point-to-point, PTP) or point-to-multipoint (point-to-multipoint, PTM) manner, the multicast/broadcast service data to a terminal device that joins a multicast/broadcast service. That an access network device does not support a multicast/broadcast function may be understood as: The access network device does not support transmission of multicast/broadcast service data in a 5G core network shared multicast/broadcast service traffic delivery (5GC Shared MBS traffic delivery) manner. In other words, the access network device supports only a 5G core network individual multicast/broadcast service traffic delivery (5GC Individual MBS traffic delivery) manner to deliver the multicast/broadcast service data. In other words, the multicast/broadcast service data is sent, to a terminal device that joins a multicast/broadcast service, based on a PDU session associated with the terminal device. It should be understood that after the multicast/broadcast service data arrives at the access network device (for example, a RAN), the multicast/broadcast service data is processed at a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and is sent to UEs that receive the multicast/broadcast service data.

A session management function network element or a multicast/broadcast control plane function network element in embodiments of this application may be implemented by one device, may be jointly implemented by a plurality of devices, or may be implemented by a functional module in a device. For example, the multicast/broadcast control plane function network element may be a functional module in the session management function network element. This is not specifically limited in embodiments of this application. It can be understood that, the foregoing functions may be network elements in a hardware device, or may be software functions running on dedicated hardware, or may be virtualization functions instantiated on a platform (for example, a cloud platform).

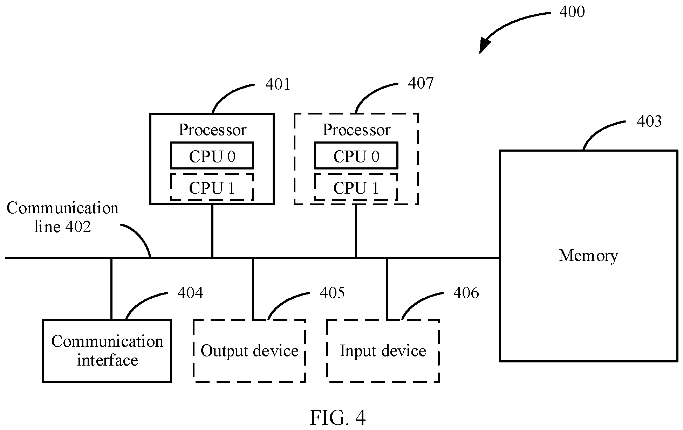

For example, the terminal device, the session management function network element, the multicast/broadcast control plane function network element, or the access network device in embodiments of this application may be implemented by using the communication device in FIG. 4. FIG. 4 is a schematic diagram of a hardware structure of a communication device according to an embodiment of this application. The communication device 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for transmitting information between the foregoing components.

The communication interface 404 uses any transceiver-type apparatus, and is configured to communicate with another device or a communication network such as the Ethernet, a radio access network (radio access network, RAN), or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions. Alternatively, the memory 403 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement a multicast/broadcast service communication method provided in the following embodiments of this application.

Optionally, the computer-executable instructions in this embodiment of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication device 400 may include a plurality of processors, for example, the processor 401 and a processor 407 in FIG. 4. Each of the processors may be a single-CPU (single-CPU) processor, or may be a multi-CPU (multi-CPU) processor. The processor herein may be one or more devices, circuits, and/or processing cores configured to process data (for example, computer program instructions).

In specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, a sensor device, or the like.

The communication device 400 may be a general-purpose device or a dedicated device. In specific implementation, the communication device 400 may be a desktop computer, a portable computer, a network server, a palmtop computer (personal digital assistant, PDA), a mobile phone, a tablet computer, a wireless terminal device, an embedded device, or a device having a structure similar to that in FIG. 4. A type of the communication device 400 is not limited in this embodiment of this application.

The following specifically describes a multicast/broadcast service communication method provided in embodiments of this application with reference to FIG. 1 to FIG. 4.

It should be noted that names of network elements, names of messages between network elements, names of parameters in messages, and the like in the following embodiments of this application are merely examples, and may alternatively have other names in specific implementation. This is not specifically limited in embodiments of this application.

The following describes the technical solutions in embodiments of this application with reference to the accompanying drawings in embodiments of this application. In descriptions of this application, unless otherwise specified, "at least one" means one or more, and "a plurality of' means two or more. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

For ease of understanding, the following specifically describes, with reference to the accompanying drawings, a multicast/broadcast service communication method and an apparatus provided in embodiments of this application.

As shown in FIG. 5a-1 and FIG. 5a-2, an embodiment of this application provides a multicast/broadcast service communication method as described below.

501: A terminal device determines a first multicast/broadcast service, where the first multicast/broadcast service is a multicast/broadcast service that the terminal device is to leave.

The first multicast/broadcast service may be a video service, for example, a service such as virtual reality (virtual reality, VR) or augmented reality (augmented reality, AR), or a live (for example, a live sports event or a live sale) program. Alternatively, the first multicast/broadcast service may be a real-time traffic status update service, a road information update service, a map update service, or the like in a self-driving technology. Alternatively, the first multicast/broadcast service may be a public safety information publishing service, for example, a real-time publishing service of warning information of an earthquake, a tsunami, or the like. Alternatively, the first multicast/broadcast service may be an internet of things device update service, for example, a software update service of an internet of things device.

For example, the first multicast/broadcast service is a live program. When a user watches the live program on the terminal device, if the user does not want to continue watching the current live program (where a reason may be that frame freezing occurs in the live program or the user is no longer interested in the current live program), the user may perform a corresponding operation (for example, tap the close or return key on a screen of the terminal device) on the terminal device to close the live program. In this way, the terminal device may determine that the terminal device needs to leave the live program (namely, the first multicast/broadcast service).

The first multicast/broadcast service is a multicast/broadcast service previously joined (which may also be referred to as already joined) by the terminal device. For ease of understanding, before descriptions of how the terminal device leaves a multicast/broadcast service, a method for how the terminal device joins a multicast/broadcast service is first briefly described.

The terminal device may join a multicast/broadcast service via a user plane or a control plane of a PDU session. For example, it is assumed that the terminal device has a PDU session 1 and a PDU session 2. The terminal device may join, based on the PDU session 1, a multicast/broadcast service whose MBS ID is 1, and join, based on the PDU session 2, a multicast/broadcast service whose MBS ID is 2. It should be understood that the terminal device knows PDU sessions and multicast/broadcast services that the terminal device joins based on the PDU sessions.

It may be understood that the method used by the terminal device to join the multicast/broadcast service is an inverse operation of the method used by the terminal device to leave the multicast/broadcast service shown in FIG. 5a-1 and FIG. 5a-2 (where for example, leave may be changed to join, delete may be changed to add, release may be changed to allocate, and the like), and details are not described herein.

502: The terminal device sends a first message, where the first message carries identification information of the first multicast/broadcast service.

In a possible design, the terminal device may send the first message to an access and mobility management function network element, where the first message is used by the terminal device to leave the first multicast/broadcast service. The first message may carry the identification information of the first multicast/broadcast service. If the terminal device needs to leave one multicast/broadcast service, the first message may carry identification information of the multicast/broadcast service. If the terminal device needs to leave a plurality of multicast/broadcast services, the first message may carry identification information of each of the plurality of multicast/broadcast services. That is, the identification information of the first multicast/broadcast service may include identification information of one or more multicast/broadcast services.

For example, the identification information of the first multicast/broadcast service may include or may be a name, an ID, an index, a multicast IP address, a multicast/broadcast service session identifier (multicast/broadcast service session ID, MBS session ID), a temporary mobile group identity (temporary mobile group identity, TMGI), a multicast/broadcast service identifier (multicast/broadcast service ID, MBS ID), or a service source specific IP multicast address (source specific IP multicast address) of the first multicast/broadcast service. This is not limited herein. Identification information of a multicast/broadcast service may be used to uniquely determine the multicast/broadcast service.

In some embodiments, the first message may further carry a first information element and/or a cause value of the first message, where the first information element indicates that an operation type corresponding to the first multicast/broadcast service is leave, and the cause value of the first message represents that the terminal device needs to leave the first multicast/broadcast service.

The operation type may be set to Delete, Quit, Leave, Unjoin, Uninterested, or another type. A name of the operation type is not limited herein, and a function of the operation type is to indicate to leave the first multicast/broadcast service. A name of the first information element may be Delete Indication, Quit Indication, Leave Indication, Unjoin indication, Uninterested indication, or an indication information element with another name. The name of the first information element is not limited herein, and a function of the first information element is to indicate to leave the first multicast/broadcast service. The cause value of the first message may be represented by a cause indication information element (Cause). A name of the cause indication information element is not limited, and a function of the cause indication information element is to indicate that a reason for triggering the first message is that the terminal device needs to leave the first multicast/broadcast service.

In a possible design, if the first multicast/broadcast service includes a plurality of multicast/broadcast services, where for example, the first multicast/broadcast service may include multicast/broadcast services corresponding to ID 1, ID 2, and ID 3 shown in (a) in FIG. 6, each of the plurality of multicast/broadcast services may correspond to one first information element or one operation type (for example, Quit/Quit Indication), and the first information element or the operation type indicates that the multicast/broadcast service needs to be left.

Optionally, as shown in (b) in FIG. 6, when each multicast/broadcast service in the first multicast/broadcast service corresponds to one first information element or one operation type, the first message may further carry the cause value of the first message.

In another possible design, if the first multicast/broadcast service includes a plurality of multicast/broadcast services, where for example, the first multicast/broadcast service includes multicast/broadcast services corresponding to ID 1, ID 2, and ID 3 shown in (c) in FIG. 6, the plurality of multicast/broadcast services may correspond to one first information element or one operation type, and the first information element or the operation type indicates that the first multicast/broadcast service needs to be left. Alternatively, as shown in (d) in FIG. 6, the first message may carry the cause value of the first message.

In embodiments of this application, the first message may be a PDU session modification request message, or the first message may be a PDU session release request message. A PDU session modification request message or a PDU session release request message may further carry an identifier of a PDU session and the like.

In addition, the PDU session release request message may further carry identification information of a second multicast/broadcast service, where the second multicast/broadcast service includes one or more to-be-migrated multicast/broadcast services of the terminal device. Migrating the second multicast/broadcast service may mean reassociating the second multicast/broadcast service with another PDU session of the terminal device. The another PDU session is different from a PDU session that is in a PDU session of the terminal device and that is associated with the first multicast/broadcast service. The second multicast/broadcast service is different from the first multicast/broadcast service. Optionally, the PDU session release request message may further carry a second information element, and the second information element indicates to migrate the second multicast/broadcast service. It should be noted that, because the PDU session release request message can be used to release an entire PDU session, if the current PDU session to be released is associated with n multicast/broadcast services, and the terminal device needs to leave only c multicast/broadcast services, remaining (n-c) multicast/broadcast services need to be migrated to maintain service continuity of the (n-c) multicast/broadcast services associated with the PDU session to be released. Therefore, the PDU session release request message may further carry identification information of the (n-c) multicast/broadcast services (the second multicast/broadcast service), to help a core network device perform a corresponding migration operation. n and c are integers, n is greater than or equal to 0, and c is greater than or equal to 0, and less than or equal to n.

503: The access and mobility management function network element receives the first message.

For the first message, refer to related descriptions of step 502. Details are not described herein again.

504: The access and mobility management function network element sends a third message.

After receiving the first message sent by the terminal device, the access and mobility management function network element may send the third message to a session management function network element. The third message may be a PDU session context update request message (for example, may be Nsmf_PDUSession_UpdateSMContext). The PDU session context update request message may carry the identification information of the first multicast/broadcast service.

Optionally, the PDU session context update request message may further carry the first information element and/or a cause value of the PDU session context update request message. The first information element may indicate that the operation type corresponding to the first multicast/broadcast service is leave, and the cause value of the PDU session context update request message represents that the terminal device needs to leave the first multicast/broadcast service. For related descriptions of the first information element and the cause value of the PDU session context update request message, refer to the related descriptions of the first information element and the cause value of the first message (provided that the cause value of the first message is replaced with the cause value of the PDU session context update request message). Details are not described herein again.

Optionally, the PDU session context update request message may further carry the identification information of the second multicast/broadcast service. Optionally, the PDU session context update request message may further carry the second information element, and the second information element indicates to migrate the second multicast/broadcast service.

505: The session management function network element receives the third message, where the third message carries the identification information of the first multicast/broadcast service.

In a possible design, the session management function network element may receive the third message sent by the access and mobility management function network element, where the third message may be a PDU session context update request message.

Optionally, the third message may further carry the first information element and/or a cause value of the third message, where the first information element indicates that the operation type corresponding to the first multicast/broadcast service is leave, and the cause value of the third message represents that the terminal device is to leave the first multicast/broadcast service. For related descriptions of the first information element and the cause value of the third message, refer to related descriptions of the first information element and the cause value of the first message in step 502 (provided that the cause value of the first message is replaced with the cause value of the third message). Details are not described herein again.

506: The session management function network element updates a PDU session context of the terminal device based on the third message.

A PDU session context may also be referred to as a session management context (session management context, SM Context) of a PDU session.

In a possible design, that the session management function network element updates a PDU session context of the terminal device may be: The session management function network element deletes the identification information of the first multicast/broadcast service from a PDU session context of the PDU session that is in the PDU session of the terminal device and that is associated with the first multicast/broadcast service. It should be understood that a PDU session context of each PDU session in the PDU session of the terminal device may include identification information of a multicast/broadcast service that the terminal device joins based on the PDU session.

For example, as shown in FIG. 7, the terminal device may establish two PDU sessions via the session management function network element, and the two PDU sessions include a PDU session 1 and a PDU session 2. A PDU session context of the PDU session 1 includes three MBS IDs: an MBS ID 1, an MBS ID 3, and an MBS ID 5. In other words, the terminal device joins, based on the PDU session 1, multicast/broadcast services corresponding to the MBS ID 1, the MBS ID 3, and the MBS ID 5. A PDU session context of the PDU session 2 includes two MBS IDs: an MBS ID 2 and an MBS ID 4. In other words, the terminal device joins, based on the PDU session 2, multicast/broadcast services corresponding to the MBS ID 2 and the MBS ID 4. If the terminal device needs to leave the multicast/broadcast service corresponding to the MBS ID 1, the session management function network element may delete identification information of the multicast/broadcast service corresponding to the MBS ID 1 from the PDU session context of the PDU session 1, and may update a quantity of multicast/broadcast services associated with the PDU session 1 from 3 to 2.

In another possible design, it may be considered that there is a "pointer" pointing to the first multicast/broadcast service in the PDU session context of the terminal device, and the session management function network element may update the PDU session context by deleting or modifying the "pointer" (to be specific, by deleting an association relationship between the first multicast/broadcast service and the PDU session context).

In addition, if the session management function network element stores a context corresponding to the first multicast/broadcast service, the session management function network element may delete an identifier of the terminal device from the context corresponding to the first multicast/broadcast service. A context corresponding to a multicast/broadcast service may also be referred to as a context of the multicast/broadcast service or a multicast/broadcast service context of the multicast/broadcast service. The context corresponding to the multicast/broadcast service may be a multicast/broadcast service session context (Multicast/Broadcast Service Session Context, MBS Session Context), a multicast session context (Multicast Session Context), a multicast/broadcast service context (Multicast/Broadcast Service Context, MB Service Context), a multicast service context (Multicast Service Context), or a multicast group context (Multicast Group Context). This is not limited in this application. The identifier of the terminal device may be a subscription permanent identifier (Subscription Permanent Identifier, SUPI) or a generic public subscription identifier (Generic Public Subscription Identifier, GPSI).

In addition, optionally, if the session management function network element stores the multicast/broadcast service context of the first multicast/broadcast service, the session management function network element may delete, from the multicast/broadcast service context of the first multicast/broadcast service, an identifier of the PDU session corresponding to the first multicast/broadcast service.

In addition, optionally, if a multicast/broadcast QoS flow corresponding to the first multicast/broadcast service is mapped to a dedicated QoS flow (dedicated QoS flow, namely, a non-default QoS flow (default QoS flow)) in the PDU session associated with the first multicast/broadcast service, the session management function network element notifies an access network device to remove/release/delete QoS parameter information corresponding to the dedicated QoS flow, for example, remove/release/delete a corresponding QoS configuration (QoS Profile). Specifically, the session management function network element may send an N1N2 message transfer (Namf_Communication_N1N2MessageTransfer) or a PDU session context update response (Nsmf_PDUSession UpdateSMContext Response) to the access and mobility management function network element. The N1N2 message transfer or the PDU session context update response may include N2 SM information (N2 SM information). The N2 SM information may be a PDU session resource modify request transfer (PDU Session Resource Modify Request Transfer). A QoS flow to release list (QoS Flow to Release List) in the PDU session resource modify request transfer may include the dedicated QoS flow on which removing/releasing/deleting needs to be performed. Alternatively, the N1N2 message transfer or the PDU session context update response may include N1 container information (N1 container or N1 SM container), and the N1 container information includes the information that is about the dedicated QoS flow and that needs to be removed/released/deleted. The N1 container information may further include a PDU session modification command (PDU Session Modification Command). The PDU session modification command includes an ID of the associated PDU session, and may further include the identification information of the multicast/broadcast service that needs to be left. The access and mobility management function network element sends, to the access network device, the N2 SM information included in the N1N2 message transfer or the PDU session context update response. For example, the access and mobility management function network element may send the N2 SM information to the access network device based on an N2 message. In addition, the access and mobility management function network element may send, to the terminal device, the N1 container information included in the N1N2 message transfer or the PDU session context update response.

Optionally, the session management function network element releases, from the PDU session context of the terminal device, unicast quality of service QoS information corresponding to the first multicast/broadcast service. The unicast QoS information corresponding to the first multicast/broadcast service may be, for example, QoS information corresponding to a QFI (QoS flow identifier, QFI) of a unicast QoS flow mapped/corresponding to a quality of service flow identifier of the multicast/broadcast QoS flow corresponding to the first multicast/broadcast service. QoS information may include at least one of a 5G quality of service identifier (5G quality of service identifier, 5QI), an allocation and retention priority (allocation and retention priority, ARP), a guaranteed flow bit rate (guaranteed flow bit rate, GFBR), and a maximum flow bit rate (maximum flow bit rate, MFBR).

In some embodiments, if the third message further carries the identification information of the second multicast/broadcast service, the session management function network element and/or the access and mobility management function network element may associate the second multicast/broadcast service with another PDU session of the terminal device, to ensure continuity of the second multicast/broadcast service.

In an optional implementation, the session management function network element (which, for example, may be a first session management function network element) determines whether there is another PDU session that has a same data network name (data network name, DNN) or another PDU session that has the same DNN and same single network slice selection assistance information (single network slice selection assistance information, S-NSSAI) as a PDU session corresponding to the second multicast/broadcast service. If there is the another PDU session, the session management function network element migrates the second multicast/broadcast service to the another PDU session. If there is not the another PDU session, the session management function network element may request the access and mobility management function network element to migrate the second multicast/broadcast service. The access and mobility management function network element determines whether another session management function network element (which, for example, may be a second session management function network element, where the second session management function network element is different from the first session management function network element) serving the terminal device has another PDU session having the same DNN or another PDU session having the same DNN and the same S-NSSAI as the PDU session corresponding to the second multicast/broadcast service. If there is the another PDU session, the access and mobility management function network element migrates the second multicast/broadcast service to the another PDU session. If there is not the another PDU session, the access and mobility management function network element sends a migration failure message to the first session management function network element, where the migration failure message includes a migration failure cause.

In another optional implementation, after receiving the PDU session release request message that is sent by the terminal device and that carries the identification information of the second multicast/broadcast service, the access and mobility management function network element may determine, based on a global view of the access and mobility management function network element, whether there is another PDU session that has a same DNN or another PDU session that has the same DNN and same S-NSSAI as a PDU session corresponding to the second multicast/broadcast service. If there is the another PDU session, the access and mobility management function network element migrates the second multicast/broadcast service to the another PDU session. The PDU session corresponding to the second multicast/broadcast service and the another PDU session may correspond to a same session management function network element or different session management function network elements. The global view of the access and mobility management function network element includes identifiers of all session management function network elements serving the terminal device and identifiers of PDU sessions that are of the terminal device and that are managed by each session management function network element. In addition, the global view may further include association information between a multicast/broadcast service that the terminal device joins and a PDU session of the terminal device.

In addition, if the access and mobility management function network element stores association relationships between all PDU sessions of the terminal device and all multicast/broadcast services, the access and mobility management function network element may update an association relationship between the PDU session corresponding to the second multicast/broadcast service and the second multicast/broadcast service. In an optional manner, the access and mobility management function network element may add the identification information of the second multicast/broadcast service to a PDU session context of the another PDU session. In another optional manner, the access and mobility management function network element may add an identifier of the another PDU session to a multicast/broadcast service context of the second multicast/broadcast service.

In some embodiments, when the terminal device is the last terminal device that leaves the first multicast/broadcast service via the session management function network element, the session management function network element may send a fourth message to a user plane function network element, where the fourth message is used to release a transmission tunnel between the user plane function network element and a service source of the first multicast/broadcast service. The service source may be a server of the first multicast/broadcast service, or may be a UPF that provides a service for the first multicast/broadcast service. This is not limited in this application.

In some embodiments, when the terminal device is the last terminal device that leaves the first multicast/broadcast service via the session management function network element, the session management function network element may send a fourth message to a user plane function network element. The fourth message is used to release a resource that is of the user plane function network element and that is used for transmitting data of the first multicast/broadcast service, for example, a packet detection rule (packet detection rule, PDR) or a forwarding action rule (forwarding action rule, FAR) for transmitting data of the first multicast/broadcast service. A service source may be a server of the first multicast/broadcast service, or may be a UPF that provides a service for the first multicast/broadcast service. This is not limited in this application.

For example, when the identification information of the first multicast/broadcast service includes identification information of at least two multicast/broadcast services (for example, including a multicast/broadcast service 1 and a multicast/broadcast service 2), and the terminal device is the last terminal device that leaves any service (such as the multicast/broadcast service 1) of the at least two multicast/broadcast services, the session management function network element may send the fourth message to the user plane function network element. The fourth message is used to release a transmission tunnel between the user plane function network element and a service resource of the any service (such as the multicast/broadcast service 1), in other words, release a user plane resource that is between the user plane function network element and the service source of the any service (such as the multicast/broadcast service 1) and that is for the any service (such as the multicast/broadcast service 1). When the identification information of the first multicast/broadcast service includes identification information of one multicast/broadcast service, and the terminal device is the last terminal device that leaves the multicast/broadcast service, the session management function network element may send the fourth message to the user plane function network element. The fourth message is used to release a transmission tunnel between the user plane function network element and a service source of the multicast/broadcast service, in other words, release a user plane resource between the user plane function network element and the service source. The fourth message may be an N4 session update/modification request message (N4 Session Update/Modification Request), or may be a PFCP session modification/update request (PFCP Session Modification/Update Request).

507: Optionally, the session management function network element sends a fifth message to a multicast/broadcast control plane function network element.

For example, if the multicast/broadcast control plane function network element is a functional module on the session management function network element, the session management function network element does not need to send the fifth message to the multicast/broadcast control plane function network element. It may be considered that when the session management function network element receives the third message, the session management function network element may update the multicast/broadcast service context of the first multicast/broadcast service based on the third message (where the third message may be a seventh message).

The fifth message may carry the identification information of the first multicast/broadcast service. The fifth message may be a multicast/broadcast session update request (Nsmf MBSSession Update request or Nmbsmf_MBSSession_Update request).

Optionally, the fifth message may further include one or more of the following: an identifier of the session management function network element, an identifier of an access network device accessed by the terminal device, an identifier of a user plane function network element corresponding to the first multicast/broadcast service, or the identifier of the terminal device. The identifier of the session management function network element corresponds to a session management function network element corresponding to a first PDU session, and the first PDU session is the PDU session that is in the PDU session of the terminal device and that is associated with the first multicast/broadcast service. The identifier of the user plane function network element corresponding to the first multicast/broadcast service is an identifier of a user plane function network element used by the terminal device to join the first multicast/broadcast service. The user plane function network element corresponding to the first multicast/broadcast service may be connected to a multicast/broadcast user plane function network element corresponding to the first multicast/broadcast service, may be connected to another user plane function network element corresponding to the first multicast/broadcast service, or may be connected to the service source of the first multicast/broadcast service.

508: The multicast/broadcast control plane function network element receives the seventh message, where the seventh message carries the identification information of the first multicast/broadcast service. The seventh message may be the same as the fifth message.

For example, if the multicast/broadcast control plane function network element is a functional module on the session management function network element, it may be considered that when the session management function network element receives the third message, the multicast/broadcast control plane function network element receives the seventh message, where the seventh message may be the same as the third message.

The multicast/broadcast control plane function network element may receive the seventh message from the session management function network element, where the seventh message carries the identification information of the first multicast/broadcast service.

Optionally, the seventh message may further carry the first information element and/or a cause value of the seventh message, where the first information element indicates that the operation type corresponding to the first multicast/broadcast service is leave, and the cause value of the seventh message represents that the terminal device is to leave the first multicast/broadcast service. For related descriptions of the first information element and the cause value of the seventh message, refer to related descriptions of the first information element and the cause value of the first message in step 502 (provided that the cause value of the first message is replaced with the cause value of the seventh message). Details are not described herein again.

Optionally, the seventh message further includes one or more of the following: the identifier of the terminal device, the identifier of the session management function network element, the identifier of the access network device accessed by the terminal device, and the identifier of the user plane function network element corresponding to the first multicast/broadcast service.

Optionally, if the terminal device joins the first multicast/broadcast service via the first session management function network element, the seventh message may carry the identification information of the first multicast/broadcast service, an identifier of the first session management function network element, and the identifier of the terminal device.

Optionally, if the terminal device joins the first multicast/broadcast service via a first access network device, the seventh message may carry the identification information of the first multicast/broadcast service, an identifier of the first access network device, and the identifier of the terminal device.

Optionally, if the terminal device joins the first multicast/broadcast service via a first user plane function network element, the seventh message may carry the identification information of the first multicast/broadcast service, an identifier of the first user plane function network element, and the identifier of the terminal device.

Optionally, if the terminal device is the last terminal device that leaves the first multicast/broadcast service via the first session management function network element, the seventh message may carry the identification information of the first multicast/broadcast service and an identifier of the first session management function network element.

Optionally, if the terminal device is the last terminal device that leaves the first multicast/broadcast service via a first access network device, the seventh message may carry the identification information of the first multicast/broadcast service and an identifier of the first access network device.

Optionally, if the terminal device is the last terminal device that leaves the first multicast/broadcast service via the first user plane function network element, the seventh message may carry the identification information of the first multicast/broadcast service and an identifier of the first user plane function network element.

509: The multicast/broadcast control plane function network element updates the multicast/broadcast service context of the first multicast/broadcast service based on the seventh message.

In a possible design, the multicast/broadcast service context of the first multicast/broadcast service may include the identification information of the first multicast/broadcast service, an identifier of a session management function network element corresponding to the multicast/broadcast service, and information about a terminal device that joins the multicast/broadcast service via the session management function network element. The information about terminal device includes identifiers and a quantity of terminal devices. For example, as shown in (a) in FIG. 8, it is assumed that the identification information of the first multicast/broadcast service is an MBS ID 1, session management function network elements corresponding to the MBS ID 1 may include an SMF 1 and an SMF 2, a quantity of terminal devices that join the first multicast/broadcast service via the SMF 1 is 3, where the terminal devices are UE 1, UE 2, and UE 3, and a quantity of terminal devices that join the first multicast/broadcast service via the SMF 2 is 2, where the terminal devices are UE 4 and UE 5.

When the multicast/broadcast service context of the first multicast/broadcast service includes the identification information of the first multicast/broadcast service, the identifier of the session management function network element corresponding to the first multicast/broadcast service, and the identifiers and the quantity of terminal devices that join the first multicast/broadcast service via the session management function network element, and when the terminal device joins the first multicast/broadcast service via the first session management function network element in the session management function network element, that the multicast/broadcast control plane function network element updates the multicast/broadcast service context of the first multicast/broadcast service may be: deleting the terminal device (where the terminal device is the terminal device corresponding to the identifier of the terminal device in the seventh message) from terminal devices that join the first multicast/broadcast service via the first session management function network element, and updating a quantity of terminal devices that join the first multicast/broadcast service via the first session management function network element.

In a possible implementation, when the seventh message received by the multicast/broadcast control plane function network element carries the identification information of the first multicast/broadcast service, the identifier of the first session management function network element, and the identifier of the terminal device, the multicast/broadcast control plane function network element determines that the terminal device corresponding to the identifier of the terminal device joins the first multicast/broadcast service via the first session management function network element, and further, the multicast/broadcast control plane function network element may delete the terminal device corresponding to the identifier of the terminal device from the terminal devices that join the first multicast/broadcast service via the first session management function network element, and update the quantity of terminal devices that join the first multicast/broadcast service via the first session management function network element.

For example, as shown in (a) in FIG. 8, it is assumed that the identification information of the first multicast/broadcast service that the terminal device needs to leave is the MBS ID 1, session management function network elements corresponding to the MBS ID 1 may include the SMF 1 and the SMF 2, a quantity of terminal devices that join the first multicast/broadcast service via the SMF 1 is 3, where the terminal devices are UE 1, UE 2, and UE 3, and a quantity of terminal devices that join the first multicast/broadcast service via the SMF 2 is 2, where the terminal devices are UE 4 and UE 5. If the terminal device is UE 1, because UE 1 is a terminal device that joins the first multicast/broadcast service via the SMF 1, the multicast/broadcast control plane function network element may delete UE 1 from the terminal devices that join the first multicast/broadcast service via the SMF 1, and update the quantity of terminal devices that join the first multicast/broadcast service via the SMF 1 from 3 to 2.

In a possible design, the multicast/broadcast service context of the first multicast/broadcast service may include the identification information of the first multicast/broadcast service, an identifier of an access network device corresponding to the multicast/broadcast service, and information about a terminal device that joins the multicast/broadcast service via the access network device. For example, as shown in (b) in FIG. 8, it is assumed that the identification information of the first multicast/broadcast service that the terminal device needs to leave is an MBS ID 1, access network devices corresponding to the MBS ID 1 may include an access network device 1 and an access network device 2, a quantity of terminal devices that join the first multicast/broadcast service via the access network device 1 is 3, where the terminal devices are UE 1, UE 2, and UE 3, and a quantity of terminal devices that join the first multicast/broadcast service via the access network device 2 is 2, where the terminal devices are UE 4 and UE 5.

When the multicast/broadcast service context of the first multicast/broadcast service includes the identification information of the first multicast/broadcast service, the identifier of the access network device corresponding to the first multicast/broadcast service, and identifiers and a quantity of terminal devices that join the first multicast/broadcast service via the access network device, and when the terminal device joins the first multicast/broadcast service via the first access network device in the access network device, that the multicast/broadcast control plane function network element updates the multicast/broadcast service context of the first multicast/broadcast service may be: deleting the terminal device (where the terminal device is the terminal device corresponding to the identifier of the terminal device in the seventh message) from terminal devices that join the first multicast/broadcast service via the first access network device, and updating a quantity of terminal devices that join the first multicast/broadcast service via the first access network device.

In a possible implementation, when the seventh message received by the multicast/broadcast control plane function network element carries the identification information of the first multicast/broadcast service, the identifier of the first access network device, and the identifier of the terminal device, the multicast/broadcast control plane function network element determines that the terminal device corresponding to the identifier of the terminal device joins the first multicast/broadcast service via the first access network device, and further, the multicast/broadcast control plane function network element may delete the terminal device corresponding to the identifier of the terminal device from the terminal devices that join the first multicast/broadcast service via the first access network device, and update the quantity of terminal devices that join the first multicast/broadcast service via the first access network device.

For example, as shown in (b) in FIG. 8, it is assumed that the identification information of the first multicast/broadcast service that the terminal device needs to leave is the MBS ID 1, access network devices corresponding to the MBS ID 1 may include the access network device 1 and the access network device 2, a quantity of terminal devices that join the first multicast/broadcast service via the access network device 1 is 3, where the terminal devices are UE 1, UE 2, and UE 3, and a quantity of terminal devices that join the first multicast/broadcast service via the access network device 2 is 2, where the terminal devices are UE 4 and UE 5. If the terminal device is UE 1, because UE 1 is a terminal device that joins the first multicast/broadcast service via the access network device 1, the multicast/broadcast control plane function network element may delete UE 1 from the terminal devices that join the first multicast/broadcast service via the access network device 1, and update the quantity of terminal devices that join the first multicast/broadcast service via the access network device 1 from 3 to 2.

In a possible design, the multicast/broadcast service context of the first multicast/broadcast service may include the identification information of the first multicast/broadcast service, an identifier of a user plane function network element corresponding to the multicast/broadcast service, and information about a terminal device that joins the multicast/broadcast service via the user plane function network element. For example, as shown in (c) in FIG. 8, it is assumed that the identification information of the first multicast/broadcast service that the terminal device needs to leave is an MBS ID 1, user plane function network elements corresponding to the MBS ID 1 may include a UPF 1 and a UPF 2, a quantity of terminal devices that join the first multicast/broadcast service via the UPF 1 is 3, where the terminal devices are UE 1, UE 2, and UE 3, and a quantity of terminal devices that join the first multicast/broadcast service via the UPF 2 is 2, where the terminal devices are UE 4 and UE 5.

When the multicast/broadcast service context of the first multicast/broadcast service includes the identification information of the first multicast/broadcast service, the identifier of the user plane function network element corresponding to the first multicast/broadcast service, and identifiers and a quantity of terminal devices that join the first multicast/broadcast service via the user plane function network element, and when the terminal device joins the first multicast/broadcast service via the first user plane function network element in the user plane function network element, that the multicast/broadcast control plane function network element updates the multicast/broadcast service context of the first multicast/broadcast service may be: deleting the terminal device (where the terminal device is the terminal device corresponding to the identifier of the terminal device in the seventh message) from terminal devices that join the first multicast/broadcast service via the first user plane function network element, and updating a quantity of terminal devices that join the first multicast/broadcast service via the first user plane function network element.

In a possible implementation, when the seventh message received by the multicast/broadcast control plane function network element carries the identification information of the first multicast/broadcast service, the identifier of the first user plane function network element, and the identifier of the terminal device, the multicast/broadcast control plane function network element determines that the terminal device corresponding to the identifier of the terminal device joins the first multicast/broadcast service via the first user plane function network element, and further the multicast/broadcast control plane function network element may delete the terminal device corresponding to the identifier of the terminal device from the terminal devices that join the first multicast/broadcast service via the first user plane function network element, and update the quantity of terminal devices that join the first multicast/broadcast service via the first user plane function network element.

For example, as shown in (c) in FIG. 8, it is assumed that the identification information of the first multicast/broadcast service that the terminal device needs to leave is the MBS ID 1, user plane function network elements corresponding to the MBS ID 1 may include the UPF 1 and the UPF 2, a quantity of terminal devices that join the first multicast/broadcast service via the UPF 1 is 3, where the terminal devices are UE 1, UE 2, and UE 3, and a quantity of terminal devices that join the first multicast/broadcast service via the UPF 2 is 2, where the terminal devices are UE 4 and UE 5. If the terminal device is UE 1, because UE 1 is a terminal device that joins the first multicast/broadcast service via the UPF 1, the multicast/broadcast control plane function network element may delete UE 1 from the terminal devices that join the first multicast/broadcast service via the UPF 1, and update the quantity of terminal devices that join the first multicast/broadcast service via the UPF 1 from 3 to 2.

In a possible design, the multicast/broadcast service context may include the identification information of the first multicast/broadcast service and an identifier of a session management function network element corresponding to the first multicast/broadcast service.

When the multicast/broadcast service context of the first multicast/broadcast service includes the identification information of the first multicast/broadcast service and the identifier of the session management function network element corresponding to the first multicast/broadcast service, and when the terminal device is the last terminal device that leaves the first multicast/broadcast service via the first session management function network element, that the multicast/broadcast control plane function network element updates the multicast/broadcast service context of the first multicast/broadcast service may be: deleting the identifier of the first session management function network element from the multicast/broadcast service context of the first multicast/broadcast service.

In a possible implementation, when the seventh message received by the multicast/broadcast control plane function network element carries the identification information of the first multicast/broadcast service and the identifier of the first session management function network element, the multicast/broadcast control plane function network element determines that the last terminal device that leaves the first multicast/broadcast service via the first session management function network element needs to leave the first multicast/broadcast service, and then the multicast/broadcast control plane function network element may delete the identifier of the first session management function network element from the multicast/broadcast service context.

In a possible design, the multicast/broadcast service context may include the identification information of the first multicast/broadcast service and an identifier of an access network device corresponding to the first multicast/broadcast service.

When the multicast/broadcast service context of the first multicast/broadcast service includes the identification information of the first multicast/broadcast service and the identifier of the access network device corresponding to the first multicast/broadcast service, and when the terminal device is the last terminal device that leaves the first multicast/broadcast service via the first access network device, that the multicast/broadcast control plane function network element updates the multicast/broadcast service context of the first multicast/broadcast service may be: deleting the identifier of the first access network device from the multicast/broadcast service context of the first multicast/broadcast service.

In a possible implementation, when the seventh message received by the multicast/broadcast control plane function network element carries the identification information of the first multicast/broadcast service and the identifier of the first access network device, the multicast/broadcast control plane function network element determines that the last terminal device that leaves the first multicast/broadcast service via the first access network device needs to leave the first multicast/broadcast service, and then the multicast/broadcast control plane function network element may delete the identifier of the first access network device from the multicast/broadcast service context.

In a possible design, the multicast/broadcast service context may include the identification information of the first multicast/broadcast service and an identifier of a user plane function network element corresponding to the first multicast/broadcast service.

When the multicast/broadcast service context of the first multicast/broadcast service includes the identification information of the first multicast/broadcast service and the identifier of the user plane function network element corresponding to the first multicast/broadcast service, and when the terminal device is the last terminal device that leaves the first multicast/broadcast service via the first user plane function network element, that the multicast/broadcast control plane function network element updates the multicast/broadcast service context of the first multicast/broadcast service may be: deleting the identifier of the first user plane function network element from the multicast/broadcast service context of the first multicast/broadcast service.

In a possible implementation, when the seventh message received by the multicast/broadcast control plane function network element carries the identification information of the first multicast/broadcast service and the identifier of the first user plane function network element, the multicast/broadcast control plane function network element determines that the last terminal device that leaves the first multicast/broadcast service via the first user plane function network element needs to leave the first multicast/broadcast service, and then the multicast/broadcast control plane function network element may delete the identifier of the first user plane function network element from the multicast/broadcast service context.

510: Optionally, the multicast/broadcast control plane function network element sends a response to the fifth message to the session management function network element.

The response to the fifth message may be a multicast/broadcast session update response (Nsmf_MBSSession_Update Response or Nmbsmf_MBSSession_Update Response), and may be used to notify the session management function network element that a first multicast/broadcast session context has been updated.

511: Optionally, the session management function network element sends a response message of the third message to the access and mobility management function network element. The response message of the third message carries the identification information of the first multicast/broadcast service.

The response message of the third message may be a PDU session context update response message. Alternatively, the response message of the third message may be an N1N2 message transfer (Namf_Communication_N1N2MessageTransfer) or a PDU session context update response (Nsmf PDUSession UpdateSMContext Response). The response message of the third message is used to notify the access and mobility management function network element that the terminal device has left some or all multicast/broadcast services in the first multicast/broadcast service.

In a possible design, if the access and mobility management function network element stores the association relationships between all the PDU sessions of the terminal device and all the multicast/broadcast services, the access and mobility management function network element may update an association relationship between the PDU session that corresponds to the first multicast/broadcast service and that is in all the PDU sessions and the first multicast/broadcast service in all the multicast/broadcast services. In an optional manner, the access and mobility management function network element may delete the identification information of the first multicast/broadcast service from a PDU context of the PDU session corresponding to the first multicast/broadcast service. In another optional manner, the access and mobility management function network element may delete, from the multicast/broadcast service context of the first multicast/broadcast service, the identifier of the PDU session corresponding to the first multicast/broadcast service.

512: The access and mobility management function network element sends a sixth message to the access network device accessed by the terminal device.

The sixth message may be an N2 message (N2 Message). The sixth message may carry the identification information of the first multicast/broadcast service. The sixth message is used to notify the access network device that the terminal device needs to leave the first multicast/broadcast service.

Optionally, the sixth message further carries the first information element and/or a cause value of the sixth message, where the first information element indicates that the operation type corresponding to the first multicast/broadcast service is leave, and the cause value of the sixth message represents that the terminal device is to leave the first multicast/broadcast service. For related descriptions of the first information element and the cause value of the sixth message, refer to related descriptions of the first information element and the cause value of the first message (provided that the cause value of the first message is replaced with the cause value of the sixth message). Details are not described herein again.

513: The access network device receives an eighth message, where the eighth message carries the identification information of the first multicast/broadcast service. The eighth message may be the same as the sixth message.

The access network device may receive the eighth message sent by the access and mobility management function network element, where the eighth message carries the identification information of the first multicast/broadcast service.

514: The access network device releases an air interface resource that is allocated to the terminal device for the first multicast/broadcast service.

The access network device releases, based on the identification information of the first multicast/broadcast service, the air interface resource that is allocated to the terminal device for the first multicast/broadcast service. It should be noted that the air interface resource released by the access network device may be at a granularity of a terminal device. For example, assuming that there are 10 terminal devices joining the first multicast/broadcast service, the access network device may allocate respective corresponding air interface resources to the 10 UEs for the first multicast/broadcast service. When UE 1 (where UE 1 is one of the terminal devices joining the first multicast/broadcast service) needs to leave the first multicast/broadcast service, only the air interface resource corresponding to UE 1 needs to be released.

In an optional manner, that the access network device releases an air interface resource that is allocated to the terminal device for the first multicast/broadcast service may be: removing the unicast QoS information related to the first multicast/broadcast service of the PDU session that is associated with the first multicast/broadcast service from a context of the terminal device. The unicast QoS information related to the first multicast/broadcast service may be, for example, unicast QoS configuration information (QoS Profile). The related unicast QoS information may be used to configure a corresponding data radio bearer (Data Radio Bearer). The data radio bearer is used for sending the data of the first multicast/broadcast service to the terminal device based on the associated PDU session.

In some embodiments, when the terminal device is the last terminal device that leaves the first multicast/broadcast service via the access network device, the access network device releases a service data transmission tunnel between the access network device and the core network device for the first multicast/broadcast service.

In a possible design, if the access network device stores the association relationships between all the PDU sessions of the terminal device and all the multicast/broadcast services, the access network device may update the association relationship between the PDU session that corresponds to the first multicast/broadcast service and that is in all the PDU sessions and the first multicast/broadcast service in all the multicast/broadcast services. In an optional manner, the access network device may delete the identification information of the first multicast/broadcast service from the PDU context of the PDU session corresponding to the first multicast/broadcast service. In another optional manner, the access network device may delete, from the multicast/broadcast service context of the first multicast/broadcast service, the identifier of the PDU session corresponding to the first multicast/broadcast service.

515: Optionally, the access network device sends a second message to the terminal device.

The second message is used to notify the terminal device that the terminal device has left the corresponding multicast/broadcast service (which is some or all multicast/broadcast services in the first multicast/broadcast service).

516: Optionally, the terminal device receives the second message.

The terminal device may receive the second message sent by the access network device. The second message carries information indicating that the terminal device has left the first multicast/broadcast service, or the second message carries identification information of the multicast/broadcast service that the terminal device has left. The identification information of the multicast/broadcast service that has been leave may include a part or all of the identification information of the first multicast/broadcast service that the terminal device needs to leave.

In addition, for a subsequent PDU session modification procedure or PDU session release procedure, refer to a conventional technology (for example, a technical specification (Technical Specification, TS) whose release number is 23.502 in 3GPP, that is, TS 23.502). Details are not described in this embodiment of this application.

Based on the method provided in this embodiment of this application, the terminal device determines the identification information of the first multicast/broadcast service that the terminal device needs to leave, and then the terminal device sends the first message, where the first message carries the identification information of the first multicast/broadcast service, so that the access network device and/or the core network device (such as the access and mobility management function network element/the session management function network element/the user plane function network element/the multicast/broadcast control plane function network element) may perform, based on the identification information of the first multicast/broadcast service, an operation for the terminal device to leave the first multicast/broadcast service. Therefore, the terminal device can leave the first multicast/broadcast service. After the terminal device leaves the first multicast/broadcast service, a network may release a corresponding network resource, thereby reducing network resource overheads.

As shown in FIG. 5b-1 to FIG. 5b-3, an embodiment of this application provides a multicast/broadcast service communication method, including step 5a01 to step 5a22.

Step 5a01 to step 5a05 are the same as step 501 to step 505, and details are not described herein again.

Step 5a06: Optionally, the session management function network element updates a PDU session context (SM Context) of the terminal device based on the third message.

In a possible design, that the session management function network element updates a PDU session context of the terminal device may be: The session management function network element determines, from a PDU session of the terminal device, a PDU session associated with the first multicast/broadcast service, and deletes identification information of the first multicast/broadcast service from a PDU session context (SM Context) of the PDU session associated with the first multicast/broadcast service. It should be understood that a PDU session context of each PDU session in a PDU session of the terminal device may include identification information of a multicast/broadcast service that the terminal device joins based on the PDU session.

In some embodiments, if the session management function network element stores a context corresponding to the first multicast/broadcast service, that the session management function network element updates the context corresponding to the first multicast/broadcast service may be: The session management function network element may delete, from the context corresponding to the first multicast/broadcast service, an identifier of the terminal device and/or a context identifier (for example, an SM Context ID) corresponding to the associated PDU session. A context corresponding to a multicast/broadcast service may be a multicast/broadcast service session context (Multicast/Broadcast Service Session Context, MBS Session Context), a multicast session context (Multicast Session Context), a multicast/broadcast service context (Multicast/Broadcast Service Context, MB Service Context), a multicast service context (Multicast Service Context), or a multicast group context (Multicast Group Context). This is not limited in this application. The identifier of the terminal device may be an SUPI, a GPSI, or the like.

In addition, optionally, if a multicast/broadcast QoS flow corresponding to the first multicast/broadcast service is mapped to a dedicated QoS flow (dedicated QoS flow, namely, a non-default QoS flow (default QoS flow)) in the associated PDU session, the session management function network element notifies an access network device to remove/release/delete QoS parameter information corresponding to the dedicated QoS flow, for example, remove/release/delete a corresponding QoS configuration (QoS Profile). Specifically, the session management function network element may send an N1N2 message transfer (Namf_Communication_N1N2MessageTransfer) or a PDU session context update response (Nsmf_PDUSession UpdateSMContext Response) to the access and mobility management function network element. The N1N2 message transfer or the PDU session context update response may include N2 SM information (N2 SM information). The N2 SM information may be a PDU session resource modify request transfer (PDU Session Resource Modify Request Transfer). A QoS flow to release list (QoS Flow to Release List) in the PDU session resource modify request transfer may include a dedicated QoS flow on which removing/releasing/deleting needs to be performed. In addition, the N1N2 message transfer or the PDU session context update response may include N1 container information. The N1 container information further includes a PDU session modification command (PDU Session Modification Command). The PDU session modification command includes an ID of the associated PDU session, and may further include the identification information of the multicast/broadcast service that needs to be left. The access and mobility management function network element sends, to the access network device, the N2 SM information included in the N1N2 message transfer or the PDU session context update response. For example, the access and mobility management function network element may send the N2 SM information to the access network device based on an N2 message. In addition, the access and mobility management function network element may send, to the terminal device, the N1 container information included in the N1N2 message transfer or the PDU session context update response.

In some embodiments, if a 5G core network individual multicast/broadcast service traffic delivery manner is used, step 5a07 to step 5a16 are performed.

Step 5a07: The session management function network element may send a fifth message to a multicast/broadcast session management function (MB-SMF) network element.

In some embodiments, when the terminal device is the last terminal device that leaves the first multicast/broadcast service via the session management function network element, the session management function network element may send the fifth message to the multicast/broadcast session management function (MB-SMF) network element. For example, if the multicast/broadcast control plane function network element is a functional module on the session management function network element, the session management function network element does not need to send the fifth message to the multicast/broadcast control plane function network element. It may be considered that when the session management function network element receives the third message, the session management function network element may update the multicast/broadcast service context of the first multicast/broadcast service based on the third message (where the third message may be a seventh message). Alternatively, for example, if the multicast/broadcast control plane function network element and the session management function network element are independently deployed network elements, the multicast/broadcast control plane function network element may update the multicast/broadcast service context of the first multicast/broadcast service based on the seventh message (where the seventh message may be the same as the fifth message). The fifth message may carry the identification information of the first multicast/broadcast service. The fifth message may be a multicast/broadcast session update request (Nsmf_MBSSession_Update request or Nmbsmf_MBSSession_Update request).

Optionally, the fifth message may further include one or more of the following information: an identifier of the session management function network element, an identifier of an access network device accessed by the terminal device, an identifier of a user plane function network element corresponding to the first multicast/broadcast service, or the identifier of the terminal device. The identifier of the session management function network element corresponds to a session management function network element corresponding to a first PDU session, and the first PDU session is a PDU session that is in a PDU session of the terminal device and that is associated with the first multicast/broadcast service. The identifier of the user plane function network element corresponding to the first multicast/broadcast service is an identifier of a user plane function network element used by the terminal device to join the first multicast/broadcast service. The user plane function network element corresponding to the first multicast/broadcast service may be connected to a multicast/broadcast user plane function network element corresponding to the first multicast/broadcast service, may be connected to another user plane function network element corresponding to the first multicast/broadcast service, or may be connected to a service source of the first multicast/broadcast service. The service source may be a server of the first multicast/broadcast service, or may be a UPF that provides a service for the first multicast/broadcast service. This is not limited in this application.

After step 5a07 is performed and before step 5a08 is performed, a step that is the same as step 508 and step 509 may be further performed. Details are not described herein again.

Step 5a08: The multicast/broadcast session management function network element sends a message 101 to a multicast/broadcast service transport function.

The multicast/broadcast session management function (MB-SMF) network element sends the message 101 to the multicast/broadcast service transport function (MBSTF, or may also be referred to as a multicast/broadcast user plane function (MB-UPF)), to release a related resource for sending data of the first multicast/broadcast service (for example, release endpoint identification information of a downlink tunnel). For example, the message 101 may be an N4 session modification request or a PFCP session modification request.

After receiving the message 101, the MBSTF may release the related resource for sending the data of the first multicast/broadcast service (for example, release the endpoint identification information of the downlink tunnel), and send a response to the message 101 to the MB-SMF.

Step 5a09: The MB-SMF sends a response to the fifth message to the session management function network element.

The response to the fifth message may be a multicast/broadcast session update response (Nsmf MBSSession_Update Response or Nmbsmf_MBSSession_Update Response), and may be used to notify the session management function network element that a first multicast/broadcast session context has been updated and/or the related resource for sending the data of the first multicast/broadcast service has been released.

Step 5a07 to step 5a09 are optional steps. After step 5a05 or 5a06, step 5a07 to step 5a16 may be performed, or after step 5a05 or 5a06, step 5a10 to step 5a16 may be directly performed.

Step 5a10: The session management function network element sends a fourth message to a user plane function network element.

The fourth message is used to release a resource that is of the user plane function network element and that is used for transmitting the data of the first multicast/broadcast service, for example, a packet detection rule (packet detection rule, PDR) or a forwarding action rule (Forwarding Action Rule, FAR) for transmitting the first multicast/broadcast service. The fourth message may be an N4 session update/modification request message (N4 Session Update/Modification Request), or may be a PFCP session modification/update request (PFCP Session Modification/Update Request).

After receiving the fourth message, the user plane function network element may release the resource that is of the user plane function network element and that is used for transmitting the data of the first multicast/broadcast service, and return a response to the fourth message to the session management function network element.

Step 5a11: The session management function network element sends a response to the third message to the access and mobility management function network element.

Optionally, if a multicast/broadcast QoS flow corresponding to the first multicast/broadcast service is mapped to a dedicated QoS flow (dedicated QoS flow, namely, a non-default QoS flow (default QoS flow)) in the associated PDU session, the session management function network element notifies the access network device to remove/release/delete QoS parameter information corresponding to the dedicated QoS flow, for example, remove/release/delete a corresponding QoS configuration (QoS Profile). Specifically, the response to the third message may be an N1N2 message transfer (Namf_Communication_N1N2MessageTransfer) or a PDU session context update response (Nsmf_PDUSession_UpdateSMContext Response). The N1N2 message transfer or the PDU session context update response may include N2 SM information (N2 SM information). The N2 SM information may be a PDU session resource modify request transfer (PDU Session Resource Modify Request Transfer). A QoS flow to release list (QoS Flow to Release List) in the PDU session resource modify request transfer may include the dedicated QoS flow on which removing/releasing/deleting needs to be performed. Alternatively, the N1N2 message transfer or the PDU session context update response may include N1 container information. The N1 container information further includes a PDU session modification command (PDU Session Modification Command). The PDU session modification command includes an ID of the associated PDU session, and may further include the identification information of the multicast/broadcast service that needs to be left. The access and mobility management function network element sends, to the access network device, the N2 SM information included in the N1N2 message transfer or the PDU session context update response. For example, the access and mobility management function network element may send the N2 SM information to the access network device based on an N2 message. In addition, the access and mobility management function network element may send, to the terminal device, the N1 container information included in the N1N2 message transfer or the PDU session context update response.

Step 5a12: The access and mobility management function network element sends a sixth message to the access network device.

The sixth message includes the N2 SM information.

After step 5a12 is performed and before step 5a13 is performed, a step that is the same as step 513 and step 514 may be further performed. Details are not described herein again.

Step 5a13: The access network device sends a second message to the terminal device.

The second message is used to notify the terminal device that the terminal device has left the corresponding multicast/broadcast service (which is some or all multicast/broadcast services in the first multicast/broadcast service). The terminal device may receive the second message sent by the access network device. The second message carries information indicating that the terminal device has left the first multicast/broadcast service, or the second message carries identification information of the multicast/broadcast service that the terminal device has left. The identification information of the multicast/broadcast service that has been leave may include a part or all of the identification information of the first multicast/broadcast service that the terminal device needs to leave.

Optionally, after receiving the second message, the terminal device may send a response message of the second message to the access network device.

Step 5a14: After the access network device receives the response message that is of the second message and that is sent by the terminal device, the access network device sends a thirteenth message to the access and mobility management function network element, where the response message of the second message may be an RRC message, the RRC message includes a NAS message, the NAS message includes an N1 SM container, and the N1 SM container includes the ID of the associated PDU session, a PDU session modification Ack (PDU Session Modification Ack), and the like; and the thirteenth message may be an N2 message, and includes the N1 SM container.

Step 5a15: The access and mobility management function network element sends a fourteenth message to the session management function network element, where the fourteenth message includes the N1 SM container in step 5a14, and the fourteenth message may be a PDU session context update request (Nsmf PDUSession UpdateSMContext Request). After receiving the fourteenth message, the session management function network element updates the PDU session context (SM Context) of the terminal device. Optionally, the session management function network element may update the PDU session context (SM Context) of the terminal device after sending a response message (namely, a PDU session context update response (Nsmf PDUSession UpdateSMContext Response)) of the fourteenth message.

Step 5a16: Optionally, the session management function network element updates the PDU session context of the terminal device based on the fourteenth message.

In a case in which step 5a06 is not performed, step 5a16 may be performed.

In a possible design, that the session management function network element updates a PDU session context of the terminal device may be: The session management function network element determines, from the PDU session of the terminal device, the PDU session associated with the first multicast/broadcast service, and deletes the identification information of the first multicast/broadcast service from the PDU session context (SM Context) of the PDU session associated with the first multicast/broadcast service. It should be understood that the PDU session context of each PDU session in the PDU session of the terminal device may include the identification information of the multicast/broadcast service that the terminal device joins based on the PDU session.

In some embodiments, if the session management function network element stores the context corresponding to the first multicast/broadcast service, that the session management function network element updates the context corresponding to the first multicast/broadcast service may be: The session management function network element may delete, from the context corresponding to the first multicast/broadcast service, the identifier of the terminal device and/or the context identifier (for example, an SM Context ID) corresponding to the associated PDU session. A context corresponding to a multicast/broadcast service may be a multicast/broadcast session context (Multicast/Broadcast Session Context, MBS Session Context), a multicast session context (Multicast Session Context), a multicast/broadcast service context (Multicast/Broadcast Service Context, MB Service Context), a multicast service context (Multicast Service Context), or a multicast group context (Multicast Group Context). This is not limited in this application. The identifier of the terminal device may be an SUPI, a GPSI, or the like.

In some another embodiments, if a 5G core network shared multicast/broadcast service traffic delivery manner is used, step 5a17 to step 5a22 are performed.

Step 5a17: The session management function network element sends a response to the third message to the access and mobility management function network element.

Specifically, the response to the third message may be an N1N2 message transfer (Namf_Communication_N1N2MessageTransfer) or a PDU session context update response (Nsmf PDUSession UpdateSMContext Response). The N1N2 message transfer or the PDU session context update response may include N2 SM information (N2 SM information). The N2 SM information may be a PDU session resource modify request transfer (PDU Session Resource Modify Request Transfer). A QoS flow to release list (QoS Flow to Release List) in the PDU session resource modify request transfer may include a dedicated QoS flow on which removing/releasing/deleting needs to be performed. In addition, the N1N2 message transfer or the PDU session context update response may include N1 container information. The N1 container information further includes a PDU session modification command (PDU Session Modification Command). The PDU session modification command includes an ID of the associated PDU session, and may further include the identification information of the multicast/broadcast service that needs to be left. The access and mobility management function network element sends, to the access network device, the N2 SM information included in the N1N2 message transfer or the PDU session context update response. For example, the access and mobility management function network element may send the N2 SM information to the access network device based on an N2 message. In addition, the access and mobility management function network element may send, to the terminal device, the N1 container information included in the N1N2 message transfer or the PDU session context update response.

Step 5a18: The access and mobility management function network element sends a sixth message to the access network device.

The sixth message includes the N2 SM information. The access network device receives the sixth message. Because the sixth message is received by using N2 signaling of the terminal device, the access network device deletes, based on the identification information of the first multicast/broadcast service, the identifier of the terminal device from the context corresponding to the first multicast/broadcast service. Because a base station may not be able to store the SUPI, the identifier of the terminal device stored in the base station may be a cell radio network temporary identifier (cell radio network temporary identifier, C-RNTI). The access network device deletes, based on the identification information of the first multicast/broadcast service, the identification information of the first multicast/broadcast service from a context corresponding to the terminal device. The context corresponding to the terminal device may be, for example, an NGAP UE context or an N2 UE context. In some embodiments, when the terminal device is the last terminal device that leaves the first multicast/broadcast service via the access network device, the access network device releases a service data transmission tunnel between the access network device and a core network device for the first multicast/broadcast service.

Step 5a19: The access network device sends a second message to the terminal device.

The second message is used to notify the terminal device that the terminal device has left the corresponding multicast/broadcast service (which is some or all multicast/broadcast services in the first multicast/broadcast service). The terminal device receives the second message. The terminal device may receive the second message sent by the access network device. The second message carries information indicating that the terminal device has left the first multicast/broadcast service, or the second message carries the identification information of the multicast/broadcast service that the terminal device has left. The identification information of the multicast/broadcast service that has been leave may include a part or all of the identification information of the first multicast/broadcast service that the terminal device needs to leave.

Optionally, after receiving the second message, the terminal device may send a response message of the second message to the access network device.

Steps 5a20 to 5a22 are the same as steps 5a14 to 5a16, and details are not described herein again.

As shown in FIG. 9A and FIG. 9B, an embodiment of this application provides a multicast/broadcast service communication method as described below.

901: A terminal device determines a first multicast/broadcast service, where the first multicast/broadcast service is a multicast/broadcast service that the terminal device is to leave.

For a specific process, refer to related descriptions of step 501.

For ease of understanding, before descriptions of how the terminal device leaves a multicast/broadcast service, a method for how the terminal device joins a multicast/broadcast service is first briefly described. The terminal device may send an RRC message to an access network device, so that the access network device can join a multicast/broadcast service via a user plane or a control plane of a PDU session. It may be understood that the method used by the terminal device to join the multicast/broadcast service may be an inverse operation of the method used by the terminal device to leave the multicast/broadcast service shown in FIG. 9A and FIG. 9B (where for example, leave may be changed to join, delete may be changed to add, release may be changed to allocate, and the like), and details are not described herein.

902: The terminal device sends a first message, where the first message carries identification information of the first multicast/broadcast service.

In a possible design, the terminal device may send the first message to a content provider/service provider (content provider/service provider, CP/SP) at an application layer, where the first message is used by the terminal device to leave the first multicast/broadcast service. The CP/SP may be a server of the first multicast/broadcast service.

The first message may carry the identification information of the first multicast/broadcast service. For the first message, refer to related descriptions of step 502. It should be noted that, different from step 502, in this step, the first message may be an HTTP message.

903: The CP/SP receives the first message.

For the first message, refer to the foregoing descriptions. Details are not described herein again.

904: The CP/SP sends a multicast/broadcast service leave request message.

After receiving the first message sent by the terminal device, the CP/SP may send the multicast/broadcast service leave request message to a multicast/broadcast control plane function network element, where the multicast/broadcast service leave request message may carry the identification information of the first multicast/broadcast service.

Optionally, the multicast/broadcast service leave request message may further carry a first information element and/or a cause value of the multicast/broadcast service leave request message, where the first information element indicates that an operation type corresponding to a multicast/broadcast service is leave, and the cause value of the multicast/broadcast service leave request message represents that the terminal device is to leave the multicast/broadcast service. Optionally, the multicast/broadcast service leave request message may further carry an identifier of the terminal device. For related descriptions of the first information element and the cause value of the multicast/broadcast service leave request message, refer to related descriptions of the first information element and the cause value of the first message in step 502 (provided that the cause value of the first message is replaced with the cause value of the multicast/broadcast service leave request message). Details are not described herein again.

905: The multicast/broadcast control plane function network element receives a seventh message, where the seventh message carries the identification information of the first multicast/broadcast service.

The multicast/broadcast control plane function network element may receive the seventh message from the CP/SP, where the seventh message carries the identification information of the first multicast/broadcast service. The seventh message may be the multicast/broadcast service leave request message.

906: The multicast/broadcast control plane function network element updates a multicast/broadcast service context of the first multicast/broadcast service based on the seventh message.

For a specific process in which the multicast/broadcast control plane function network element updates the multicast/broadcast service context of the first multicast/broadcast service, refer to related descriptions of step 509. Details are not described herein again.

907: Optionally, the multicast/broadcast control plane function network element sends a first notification message.

The multicast/broadcast control plane function network element may send the first notification message to a session management function network element, where the first notification message is used to notify the session management function network element that the terminal device needs to leave the first multicast/broadcast service. The first notification message carries the identification information of the first multicast/broadcast service.

For example, if the multicast/broadcast control plane function network element is a functional module on the session management function network element, the multicast/broadcast control plane function network element does not need to send the first notification message to the session management function network element. It may be considered that when the multicast/broadcast control plane function network element receives the seventh message, the session management function network element receives the seventh message.

908: The session management function network element receives the first notification message.

After receiving the first notification message sent by the multicast/broadcast control plane function network element or receiving the seventh message, the session management function network element may check whether the terminal device is in a connection management (connection management, CM)-idle mode (CM-IDLE mode). If the UE is in the idle mode, the session management function network element may trigger a service request (Service Request) procedure to enable the terminal device to return to a CM-connected mode (CM-CONNECTED mode). Then, the session management function network element updates a PDU session context of the terminal device based on the identification information of the first multicast/broadcast service. For a specific process, refer to related descriptions of step 506. Details are not described herein again.

909: The session management function network element sends an eighth message.

The session management function network element may send, via an access and mobility management function network element, the eighth message to an access network device accessed (attached) by the terminal device, where the eighth message carries the identification information of the first multicast/broadcast service, and is used to notify the access network device that the terminal device needs to leave the first multicast/broadcast service.

In some embodiments, when the terminal device is the last terminal device that leaves the first multicast/broadcast service via the session management function network element, the session management function network element may send a fourth message to a user plane function network element, where the fourth message is used to release a transmission tunnel between the user plane function network element and a service source of the first multicast/broadcast service. The service source may be a server of the first multicast/broadcast service, or may be a UPF that provides a service for the first multicast/broadcast service.

910: The access network device receives the eighth message, where the eighth message carries the identification information of the first multicast/broadcast service.

The access network device may receive the eighth message sent by the access and mobility management function network element, where the eighth message carries the identification information of the first multicast/broadcast service.

911: The access network device releases an air interface resource that is allocated to the terminal device for the first multicast/broadcast service.

The access network device releases, based on the identification information of the first multicast/broadcast service, the air interface resource that is allocated to the terminal device for the first multicast/broadcast service. For related descriptions, refer to step 514. Details are not described herein again.

In some embodiments, when the terminal device is the last terminal device that leaves the first multicast/broadcast service via the access network device, the access network device releases a service data transmission tunnel between the access network device and a core network device for the first multicast/broadcast service.

In a possible design, if the access network device stores association relationships between all PDU sessions of the terminal device and all multicast/broadcast services, the access network device may update an association relationship between a PDU session that corresponds to the first multicast/broadcast service and that is in all the PDU sessions and the first multicast/broadcast service in all the multicast/broadcast services. In an optional manner, the access network device may delete the identification information of the first multicast/broadcast service from a PDU context of the PDU session corresponding to the first multicast/broadcast service. In another optional manner, the access network device may delete, from the multicast/broadcast service context of the first multicast/broadcast service, an identifier of the PDU session corresponding to the first multicast/broadcast service.

912: Optionally, the access network device may respond to the session management function network element with a second notification message.

The second notification message carries the information indicating that the terminal device has left the first multicast/broadcast service, or carries identification information of a multicast/broadcast service that the terminal device has left.

913: Optionally, after receiving the second notification message, the session management function network element may respond to the multicast/broadcast control plane function network element with a third notification message.

The third notification message carries the information indicating that the terminal device has left the first multicast/broadcast service, or carries the identification information of the multicast/broadcast service that the terminal device has left.

914: Optionally, after receiving the third notification message, the multicast/broadcast control plane function network element may respond to the CP/SP with a fourth notification message.

The fourth notification message carries the information indicating that the terminal device has left the first multicast/broadcast service, or carries the identification information of the multicast/broadcast service that the terminal device has left.

915: Optionally, after receiving the fourth notification message, the CP/SP may send a second message to the terminal device at an application layer.

The second message carries the information indicating that the terminal device has left the first multicast/broadcast service, or carries the identification information of the multicast/broadcast service that the terminal device has left.

915: Optionally, the CP/SP sends the second message to the terminal device at the application layer.

The second message carries the information indicating that the terminal device has left the first multicast/broadcast service, or carries the identification information of the multicast/broadcast service that the terminal device has left.

916: Optionally, the terminal device receives the second message.

The terminal device may receive the second message sent by the CP/SP. The second message carries the information indicating that the terminal device has left the first multicast/broadcast service, or the second message carries the identification information of the multicast/broadcast service that the terminal device has left. The identification information of the multicast/broadcast service that has been leave may include a part or all of the identification information of the first multicast/broadcast service that the terminal device needs to leave.

Based on the method provided in this embodiment of this application, the terminal device determines the identification information of the first multicast/broadcast service that the terminal device needs to leave, and then the terminal device sends the first message, where the first message carries the identification information of the first multicast/broadcast service, so that the CP/SP, the access network device, and/or the core network device (such as the access and mobility management function network element/the session management function network element/the user plane function network element/the multicast/broadcast control plane function network element) may perform an operation for the terminal device to leave the first multicast/broadcast service. Therefore, the terminal device can leave the first multicast/broadcast service. After the terminal device leaves the first multicast/broadcast service, a network may release a corresponding network resource, thereby reducing network resource overheads.

As shown in FIG. 10A and FIG. 10B, an embodiment of this application provides a multicast/broadcast service communication method as described below.

1001: A terminal device determines a first multicast/broadcast service, where the first multicast/broadcast service is a multicast/broadcast service that the terminal device is to leave.

For a specific process, refer to related descriptions of step 501.

The first multicast/broadcast service is a multicast/broadcast service previously joined by the terminal device. For ease of understanding, before descriptions of how the terminal device leaves a multicast/broadcast service, a method for how the terminal device joins a multicast/broadcast service is first briefly described. The method used by the terminal device to join the multicast/broadcast service includes steps S101 to S105.

S101: The terminal device sends a ninth message, where the ninth message carries identification information of a third multicast/broadcast service.

The terminal device may send the ninth message to an access network device, where the ninth message carries the identification information of the third multicast/broadcast service and an identifier of a second PDU session. The third multicast/broadcast service may include one or more multicast/broadcast services to be joined by the terminal device, and the identifier of the second PDU session corresponds to a PDU session that is determined by the terminal device and that is associated with the third multicast/broadcast service. The ninth message may be an RRC message.

In some embodiments, the ninth message may further carry a third information element and/or a cause value of the ninth message. The third information element indicates that an operation type corresponding to the third multicast/broadcast service is join, and the cause value of the ninth message represents that the terminal device needs to join the third multicast/broadcast service.

An operation type may be set to add, join, interested, or another type. A name of the operation type is not limited herein, and a function of the operation type is to indicate to join the third multicast/broadcast service. A name of the third information element may be add indication, join indication, interested indication, or another name of an indication information element. The name of the third information element is not limited herein, and a function of the third information element is to indicate to join the third multicast/broadcast service. The cause value of the ninth message may be represented by a cause indication information element (cause), a name of the cause indication information element is not limited, and a function of the cause indication information element is to indicate that a reason for triggering the ninth message is that the terminal device needs to join the third multicast/broadcast service.

S102: The access network device receives the ninth message.

After receiving the ninth message, the access network device may send a tenth message to an access and mobility management function network element, where the tenth message carries the identification information of the third multicast/broadcast service, and the tenth message may be a PDU session modification request message. After receiving the tenth message, the access and mobility management function network element may send an eleventh message to a session management function network element corresponding to the second PDU session. The eleventh message may be a PDU session context update request message, and the eleventh message carries the identification information of the third multicast/broadcast service.

Optionally, the eleventh message may further carry the third information element and/or a cause value of the eleventh message. The third information element indicates that the operation type corresponding to the third multicast/broadcast service is join, and the cause value of the eleventh message represents that the terminal device needs to join the third multicast/broadcast service. Optionally, the eleventh message may further carry an identifier of a PDU session, an identifier of the terminal device, and the like.

S103: The session management function network element receives the eleventh message, and updates a PDU session context of the terminal device based on the eleventh message.

In a possible design, that the session management function network element updates a PDU session context of the terminal device may be: The session management function network element adds the identification information of the third multicast/broadcast service to the PDU session context of the terminal device.

S104: The session management function network element sends a multicast/broadcast service join request message to a multicast/broadcast control plane function network element.

The multicast/broadcast service join request message carries the identification information of the third multicast/broadcast service. Optionally, the PDU session modification request message may further carry the third information element and/or a cause value of the multicast/broadcast service join request message. The third information element indicates that the operation type corresponding to the third multicast/broadcast service is join, and the cause value of the multicast/broadcast service join request message represents that the terminal device needs to join the third multicast/broadcast service.

Optionally, the PDU session modification request message may further carry one or more of the following: the identifier of the terminal device, an identifier of the session management function network element, an identifier of an access network device accessed by the terminal device, and an identifier of a user plane function network element corresponding to the third multicast/broadcast service.

Optionally, if the terminal device needs to join the third multicast/broadcast service via a first session management function network element, the ninth message may carry the identification information of the third multicast/broadcast service, an identifier of the first session management function network element, and the identifier of the terminal device.

Optionally, if the terminal device needs to join the third multicast/broadcast service via a first access network device, the ninth message may carry the identification information of the third multicast/broadcast service, an identifier of the first access network device, and the identifier of the terminal device.

Optionally, if the terminal device needs to join the third multicast/broadcast service via a first user plane function network element, the ninth message may carry the identification information of the third multicast/broadcast service, an identifier of the first user plane function network element, and the identifier of the terminal device.

Optionally, if the terminal device is the first terminal device that needs to join the third multicast/broadcast service via a first session management function network element, the ninth message may carry the identification information of the third multicast/broadcast service and an identifier of the first session management function network element.

Optionally, if the terminal device is the first terminal device that needs to join the third multicast/broadcast service via a first access network device, the ninth message may carry the identification information of the third multicast/broadcast service and an identifier of the first access network device.

Optionally, if the terminal device is the first terminal device that needs to join the third multicast/broadcast service via a first user plane function network element, the ninth message may carry the identification information of the third multicast/broadcast service and an identifier of the first user plane function network element.

S105: The multicast/broadcast control plane function network element receives the multicast/broadcast service join request message, and updates a multicast/broadcast service context of the third multicast/broadcast service based on the multicast/broadcast service joining request message.

For the multicast/broadcast service context of the third multicast/broadcast service, refer to related descriptions of the multicast/broadcast service context of the first multicast/broadcast service in step 509 (provided that the multicast/broadcast service context of the first multicast/broadcast service is replaced with the multicast/broadcast service context of the third multicast/broadcast service). Details are not described herein again.

For example, when the multicast/broadcast service context of the third multicast/broadcast service includes the identification information of the third multicast/broadcast service, an identifier of a session management function network element corresponding to the third multicast/broadcast service, and identifiers and a quantity of terminal devices that join the third multicast/broadcast service via the session management function network element, and when the terminal device needs to join the third multicast/broadcast service via the first session management function network element in the session management function network element, that the multicast/broadcast control plane function network element updates a multicast/broadcast service context of the third multicast/broadcast service may be: adding the terminal device (where the terminal device is the terminal device corresponding to the identifier of the terminal device in the ninth message) to terminal devices that join the third multicast/broadcast service via the first session management function network element, and updating a quantity of terminal devices that join the third multicast/broadcast service via the first session management function network element.

When the multicast/broadcast service context of the third multicast/broadcast service includes the identification information of the third multicast/broadcast service, an identifier of an access network device corresponding to the third multicast/broadcast service, and identifiers and a quantity of terminal devices that join the third multicast/broadcast service via the access network device, and when the terminal device needs to join the third multicast/broadcast service via the first access network device in the access network device, that the multicast/broadcast control plane function network element updates a multicast/broadcast service context of the third multicast/broadcast service may be: adding the terminal device (where the terminal device is the terminal device corresponding to the identifier of the terminal device in the ninth message) to terminal devices that join the third multicast/broadcast service via the first access network device, and updating a quantity of terminal devices that join the third multicast/broadcast service via the first access network device.

When the multicast/broadcast service context of the third multicast/broadcast service includes the identification information of the third multicast/broadcast service, an identifier of a user plane function network element corresponding to the third multicast/broadcast service, and identifiers and a quantity of terminal devices that join the third multicast/broadcast service via the user plane function network element, and when the terminal device needs to join the third multicast/broadcast service via the first user plane function network element in the user plane function network element, that the multicast/broadcast control plane function network element updates a multicast/broadcast service context of the third multicast/broadcast service may be: adding the terminal device (where the terminal device is the terminal device corresponding to the identifier of the terminal device in the ninth message) to terminal devices that join the third multicast/broadcast service via the first user plane function network element, and updating a quantity of terminal devices that join the third multicast/broadcast service via the first user plane function network element.

When the multicast/broadcast service context of the third multicast/broadcast service includes the identification information of the third multicast/broadcast service and an identifier of a session management function network element corresponding to the third multicast/broadcast service, and when the terminal device is the first terminal device that joins the third multicast/broadcast service via the first session management function network element, that the multicast/broadcast control plane function network element updates a multicast/broadcast service context of the third multicast/broadcast service may be: adding the identifier of the first session management function network element to the multicast/broadcast service context of the third multicast/broadcast service.

When the multicast/broadcast service context of the third multicast/broadcast service includes the identification information of the third multicast/broadcast service and an identifier of an access network device corresponding to the third multicast/broadcast service, and when the terminal device is the first terminal device that joins the third multicast/broadcast service via the first access network device, that the multicast/broadcast control plane function network element updates a multicast/broadcast service context of the third multicast/broadcast service may be: adding the identifier of the first access network device to the multicast/broadcast service context of the third multicast/broadcast service.

When the multicast/broadcast service context of the third multicast/broadcast service includes the identification information of the third multicast/broadcast service and an identifier of a user plane function network element corresponding to the third multicast/broadcast service, and when the terminal device is the first terminal device that joins the third multicast/broadcast service via the first user plane function network element, that the multicast/broadcast control plane function network element updates a multicast/broadcast service context of the third multicast/broadcast service may be: adding the identifier of the first user plane function network element to the multicast/broadcast service context of the third multicast/broadcast service.

After updating the multicast/broadcast service context of the third multicast/broadcast service, the multicast/broadcast control plane function network element may notify the session management function network element that the terminal device has joined some or all multicast/broadcast services in the third multicast/broadcast service. The session management function network element may notify the access and mobility management function network element that the terminal device has joined some or all multicast/broadcast services in the third multicast/broadcast service. The access network device may send an RRC message to the terminal device, to notify the terminal device that the terminal device has joined some or all multicast/broadcast services in the third multicast/broadcast service. The RRC message carries information indicating that the terminal device has joined the third multicast/broadcast service, or carries identification information of a multicast/broadcast service (which is some or all multicast/broadcast services in the third multicast/broadcast service) that the terminal device has joined.

Optionally, the access and mobility management function network element may store an association relationship between the PDU session corresponding to the third multicast/broadcast service and the third multicast/broadcast service. In an optional manner, the access and mobility management function network element may add the identification information of the third multicast/broadcast service to a PDU context of the PDU session corresponding to the third multicast/broadcast service. In another optional manner, the access and mobility management function network element may add, to the multicast/broadcast service context of the third multicast/broadcast service, an identifier of the PDU session corresponding to the third multicast/broadcast service.

Optionally, the access network device may store an association relationship between the PDU session corresponding to the third multicast/broadcast service and the third multicast/broadcast service. In an optional manner, the access network device may add the identification information of the third multicast/broadcast service to a PDU context of the PDU session corresponding to the third multicast/broadcast service. In another optional manner, the access network device may add, to the multicast/broadcast service context of the third multicast/broadcast service, an identifier of the PDU session corresponding to the third multicast/broadcast service.

1002: The terminal device sends a first message, where the first message carries identification information of a first multicast/broadcast service.

In a possible design, the terminal device may send the first message to the access network device, where the first message is used by the terminal device to leave the first multicast/broadcast service.

In a possible design, the terminal device may send the first message to another device, and the another device forwards the first message to the access and mobility management function network element, or directly sends the first message to the access and mobility management function network element. This is not limited in this application.

The first message may carry the identification information of the first multicast/broadcast service. Optionally, the first message may further carry an identifier of a first PDU session, and the first PDU session is a PDU session that is in a PDU session of the terminal device and that is associated with the first multicast/broadcast service. For the first message, refer to related descriptions of step 502. It should be noted that, different from step 502, in this step, the first message may be an RRC message.

1003: Optionally, the access network device receives the first message.

For the first message, refer to the foregoing related descriptions. Details are not described herein again.

1004: Optionally, the access network device sends a twelfth message.

After receiving the first message sent by the terminal device, the access network device may send the twelfth message to the access and mobility management function network element, where the twelfth message carries the identification information of the first multicast/broadcast service, and the twelfth message may be a PDU session modification request message.

1005: The access and mobility management function network element receives the twelfth message.

1006: The access and mobility management function network element sends a third message.

After receiving the twelfth message, the access and mobility management function network element may send the third message to a session management function network element corresponding to the first PDU session, where the third message carries the identification information of the first multicast/broadcast service. The third message may be a PDU session context update message.

1007: The session management function network element receives the third message, where the third message carries the identification information of the first multicast/broadcast service.

The session management function network element may receive the third message sent by the access and mobility management function network element.

Optionally, the third message may further carry a first information element and/or a cause value of the third message, where the first information element indicates that an operation type corresponding to the first multicast/broadcast service is leave, and the cause value of the third message represents that the terminal device is to leave the first multicast/broadcast service. For related descriptions of the first information element and the cause value of the third message, refer to related descriptions of the first information element and the cause value of the first message in step 502 (provided that the cause value of the first message is replaced with the cause value of the third message). Details are not described herein again.

1008: The session management function network element updates the PDU session context of the terminal device based on the third message.

For a specific process, refer to related descriptions of step 506. Details are not described herein again.

1009: Optionally, the session management function network element sends a fifth message to the multicast/broadcast control plane function network element.

The fifth message may carry the identification information of the first multicast/broadcast service. The fifth message is used to notify the multicast/broadcast control plane function network element that the terminal device needs to leave the first multicast/broadcast service.

1010: The multicast/broadcast control plane function network element receives a seventh message, where the seventh message carries the identification information of the first multicast/broadcast service. The seventh message may be the same as the fifth message.

For a specific process, refer to related descriptions of step 508. Details are not described herein again.

1011: The multicast/broadcast control plane function network element updates a multicast/broadcast service context of the first multicast/broadcast service based on the seventh message.

For a specific process in which the multicast/broadcast control plane function network element updates the multicast/broadcast service context of the first multicast/broadcast service, refer to related descriptions of step 509. Details are not described herein again.

1012: Optionally, the multicast/broadcast control plane function network element notifies the session management function network element that the terminal device has left the first multicast/broadcast service.

After updating the multicast/broadcast service context of the first multicast/broadcast service, the multicast/broadcast control plane function network element may notify the session management function network element that the terminal device has left the first multicast/broadcast service.

1013: The session management function network element sends a sixth message to the access network device accessed by the terminal device.

The session management function network element may send, via the access and mobility management function network element, the sixth message to the access network device accessed by the terminal device, where the sixth message carries the identification information of the first multicast/broadcast service. The sixth message is used to notify the access network device that the terminal device needs to leave the first multicast/broadcast service.

Optionally, the sixth message further carries the first information element and/or a cause value of the sixth message, where the first information element indicates that the operation type corresponding to the first multicast/broadcast service is leave, and the cause value of the sixth message represents that the terminal device is to leave the first multicast/broadcast service. For related descriptions of the first information element and the cause value of the sixth message, refer to related descriptions of the first information element and the cause value of the first message (provided that the cause value of the first message is replaced with the cause value of the sixth message). Details are not described herein again.

1014: The access network device receives an eighth message, where the eighth message carries the identification information of the first multicast/broadcast service.

The access network device may receive the eighth message sent by the access and mobility management function network element, where the eighth message carries the identification information of the first multicast/broadcast service that the terminal device needs to leave. The eighth message may be the same as the sixth message.

1015: The access network device releases an air interface resource that is allocated to the terminal device for the first multicast/broadcast service.

For a specific process, refer to related descriptions of step 514. Details are not described herein again.

1016: Optionally, the access network device sends a second message to the terminal device.

The second message is used to notify the terminal device that the terminal device has left a corresponding multicast/broadcast service (which is some or all multicast/broadcast services in the first multicast/broadcast service).

1017: Optionally, the terminal device receives the second message.

For a specific process, refer to related descriptions of step 516. Details are not described herein again.

Based on the method provided in this embodiment of this application, the terminal device determines the identification information of the first multicast/broadcast service that the terminal device needs to leave, and then the terminal device sends the first message, where the first message carries the identification information of the first multicast/broadcast service, so that the access network device and/or a core network device (such as the access and mobility management function network element/the session management function network element/a user plane function network element/the multicast/broadcast control plane function network element) may perform an operation for the terminal device to leave the first multicast/broadcast service. Therefore, the terminal device can leave the first multicast/broadcast service. After the terminal device leaves the first multicast/broadcast service, a network may release a corresponding network resource, thereby reducing network resource overheads.

In the foregoing embodiments provided in this application, the methods provided in embodiments of this application are separately described from perspectives of the terminal device, the session management function network element, the multicast/broadcast control plane function network element, the access network device, and interaction between the terminal device, the session management function network element, the multicast/broadcast control plane function network element, and the access network device. Optionally, in the foregoing embodiments provided in this application, the access and mobility management function network element may be further included, and the access and mobility management function network element may interact with the terminal device and the session management function network element. To implement the functions in the methods provided in embodiments of this application, the terminal device, the session management function network element, the multicast/broadcast control plane function network element, and the access network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

When each functional module is obtained through division based on each corresponding function, FIG. 11 is a possible schematic diagram of a structure of an apparatus 11 in the foregoing embodiments. The apparatus may be a terminal device, and the terminal device includes a processing unit 1101 and a sending unit 1102. In this embodiment of this application, the processing unit 1101 is configured to determine a first multicast/broadcast service, where the first multicast/broadcast service is a multicast/broadcast service that the terminal device is to leave. The sending unit 1102 is configured to send a first message, where the first message carries identification information of the first multicast/broadcast service.

The processing unit 1101 may be the processor 401 and/or the processor 407 in FIG. 4. The sending unit 1102 may be the communication interface 404 in FIG. 4.

In the method embodiment shown in FIG. 5a-1 and FIG. 5a-2 and FIG. 5b-1 to FIG. 5b-3, FIG. 9A and FIG. 9B, or FIG. 10A and FIG. 10B, the processing unit 1101 is configured to support the terminal device in performing the process 501 in FIG. 5a-1 and FIG. 5a-2 and FIG. 5b-1 to FIG. 5b-3, the process 901 in FIG. 9A and FIG. 9B, and the process 1001 in FIG. 10A and FIG. 10B. The sending unit 1102 is configured to support the terminal device in performing the process 502 in FIG. 5a-1 and FIG. 5a-2 and FIG. 5b-1 to FIG. 5b-3, the process 902 in FIG. 9A and FIG. 9B, and the process 1002 in FIG. 10A and FIG. 10B. All related content of the steps in the foregoing method embodiments may be cited in function descriptions of the corresponding functional modules. Details are not described herein again.

When each functional module is obtained through division based on each corresponding function, FIG. 12 is a possible schematic diagram of a structure of an apparatus 12 in the foregoing embodiments. The apparatus may be a session management function network element, and the session management function network element includes a receiving unit 1201 and a processing unit 1202. In this embodiment of this application, the receiving unit 1201 is configured to receive a third message, where the third message carries identification information of a first multicast/broadcast service, and the first multicast/broadcast service is a multicast/broadcast service that a terminal device is to leave. The processing unit 1202 is configured to update a protocol data unit PDU session context of the terminal device based on the third message.

The receiving unit 1201 may be the communication interface 404 in FIG. 4, and the processing unit 1202 may be the processor 401 and/or the processor 407 in FIG. 4.

In the method embodiment shown in FIG. 5a-1 and FIG. 5a-2 and FIG. 5b-1 to FIG. 5b-3, FIG. 9A and FIG. 9B, or FIG. 10A and FIG. 10B, the receiving unit 1201 is configured to support the session management function network element in performing the process 505 in FIG. 5a-1 and FIG. 5a-2 and FIG. 5b-1 to FIG. 5b-3, the process 908 in FIG. 9A and FIG. 9B, and the process 1007 in FIG. 10A and FIG. 10B. The processing unit 1202 is configured to support the session management function network element in performing the process 506 in FIG. 5a-1 and FIG. 5a-2 and FIG. 5b-1 to FIG. 5b-3 and the process 1008 in FIG. 10A and FIG. 10B. All related content of the steps in the foregoing method embodiments may be cited in function descriptions of the corresponding functional modules. Details are not described herein again.

When each functional module is obtained through division based on each corresponding function, FIG. 13 is a possible schematic diagram of a structure of an apparatus 13 in the foregoing embodiments. The apparatus may be a multicast/broadcast control plane function network element, and the multicast/broadcast control plane function network element includes a receiving unit 1301 and a processing unit 1302. In this embodiment of this application, the receiving unit 1301 is configured to receive a seventh message, where the seventh message carries identification information of a first multicast/broadcast service, and the first multicast/broadcast service is a multicast/broadcast service that a terminal device is to leave. The processing unit 1302 is configured to update a multicast/broadcast service context of the first multicast/broadcast service based on the seventh message.

The receiving unit 1301 may be the communication interface 404 in FIG. 4, and the processing unit 1302 may be the processor 401 and/or the processor 407 in FIG. 4.

In the method embodiment shown in FIG. 5a-1 and FIG. 5a-2 and FIG. 5b-1 to FIG. 5b-3, FIG. 9A and FIG. 9B, or FIG. 10A and FIG. 10B, the receiving unit 1301 is configured to support the multicast/broadcast control plane function network element in performing the process 508 in FIG. 5a-1 and FIG. 5a-2 and FIG. 5b-1 to FIG. 5b-3, the process 905 in FIG. 9A and FIG. 9B, and the process 1010 in FIG. 10A and FIG. 10B. The processing unit 1302 is configured to support the multicast/broadcast control plane function network element in performing the process 509 in FIG. 5a-1 and FIG. 5a-2 and FIG. 5b-1 to FIG. 5b-3, the process 906 in FIG. 9A and FIG. 9B, and the process 1011 in FIG. 10A and FIG. 10B. All related content of the steps in the foregoing method embodiments may be cited in function descriptions of the corresponding functional modules. Details are not described herein again.

When each functional module is obtained through division based on each corresponding function, FIG. 14 is a possible schematic diagram of a structure of an apparatus 14 in the foregoing embodiments. The apparatus may be an access network device, and the access network device includes a receiving unit 1401 and a processing unit 1402. In this embodiment of this application, the receiving unit 1401 is configured to receive an eighth message, where the eighth message carries identification information of a first multicast/broadcast service, and the first multicast/broadcast service is a multicast/broadcast service that a terminal device is to leave. The processing unit 1402 is configured to release an air interface resource that is allocated to the terminal device for the first multicast/broadcast service.

The receiving unit 1401 may be the communication interface 404 in FIG. 4, and the processing unit 1402 may be the processor 401 and/or the processor 407 in FIG. 4.

In the method embodiment shown in FIG. 5a-1 and FIG. 5a-2 and FIG. 5b-1 to FIG. 5b-3, FIG. 9A and FIG. 9B, or FIG. 10A and FIG. 10B, the receiving unit 1401 is configured to support the access network device in performing the process 513 in FIG. 5a-1 and FIG. 5a-2 and FIG. 5b-1 to FIG. 5b-3, the process 910 in FIG. 9A and FIG. 9B, and the process 1014 in FIG. 10A and FIG. 10B. The processing unit 1402 is configured to support the access network device in performing the process 514 in FIG. 5a-1 and FIG. 5a-2 and FIG. 5b-1 to FIG. 5b-3, the process 911 in FIG. 9A and FIG. 9B, and the process 1015 in FIG. 10A and FIG. 10B. All related content of the steps in the foregoing method embodiments may be cited in function descriptions of the corresponding functional modules. Details are not described herein again.

For example, the terminal device, the session management function network element, the multicast/broadcast control plane function network element, and the access network device in the foregoing apparatus embodiments may completely correspond to the terminal device, the session management function network element, the multicast/broadcast control plane function network element, and the access network device in the method embodiments, and corresponding modules or units perform corresponding steps. For example, a communication module (transceiver) may perform sending and/or receiving steps in the method embodiments, and other steps than sending and receiving may be performed by a processing unit (processor). For a function of a specific unit, refer to a corresponding method embodiment. A sending unit and a receiving unit may form a transceiver unit, and a transmitter and a receiver may form a transceiver, to jointly implement sending and receiving functions. There may be one or more processors.

For example, functions of the terminal device, the session management function network element, the multicast/broadcast control plane function network element, and the access network device may be implemented by using a chip. The processing unit may be implemented by using hardware, or may be implemented by using software. When the processing unit is implemented by using hardware, the processing unit may be a logic circuit, an integrated circuit, or the like. When the processing unit is implemented by using software, the processing unit may be a general-purpose processor, and is implemented by reading software code stored in a storage unit. The storage unit may be integrated into the processor, or may be located outside the processor and exist independently.

Module or unit division in embodiments of this application is an example, is merely logical function division, and may be other division during actual implementations. In addition, functional modules in embodiments of this application may be integrated into one processor, may exist alone physically, or two or more modules may be integrated into one module. The integrated module may be implemented in a form of hardware, or may be implemented in a form of a software functional module. For example, in embodiments of this application, the receiving unit and the sending unit may be integrated into the transceiver unit.

It is clear that a person skilled in the art can make various modifications and variations to embodiments of this application without departing from the spirit and scope of this application. This application is intended to cover these modifications and variations of embodiments of this application provided that they fall within the scope of protection defined by the following claims and their equivalent technologies.

## Claims

1. A multicast/broadcast service communication method, comprising:
determining, by a terminal device, a first multicast/broadcast service, wherein the first multicast/broadcast service is a multicast/broadcast service that the terminal device is to leave; and
sending, by the terminal device, a first message, wherein the first message carries identification information of the first multicast/broadcast service.

2. The method according to claim 1, wherein the method further comprises:
receiving, by the terminal device, a second message, wherein
the second message carries information indicating that the terminal device has left the first multicast/broadcast service, or the second message carries identification information of a multicast/broadcast service that the terminal device has left.

3. The method according to claim 1 or 2, wherein the first message further carries a first information element and/or a cause value of the first message, and
the first information element indicates that an operation type corresponding to the first multicast/broadcast service is leave, and the cause value of the first message represents that the terminal device is to leave the first multicast/broadcast service.

4. The method according to any one of claims 1 to 3, wherein the first message is a protocol data unit PDU session modification request message, a PDU session release request message, a radio resource control RRC message, or a hypertext transfer protocol HTTP message.

5. The method according to claim 2, wherein the second message is a radio resource control RRC message or a hypertext transfer protocol HTTP message.

6. A multicast/broadcast service communication method, comprising:
receiving, by a session management function network element, a third message, wherein the third message carries identification information of a first multicast/broadcast service, and the first multicast/broadcast service is a multicast/broadcast service that a terminal device is to leave; and
updating, by the session management function network element, a session management context of a protocol data unit PDU session of the terminal device based on the third message.

7. The multicast/broadcast service communication method according to claim 6, wherein the updating, by the session management function network element, a session management context of a protocol data unit PDU session of the terminal device based on the third message comprises:
deleting, by the session management function network element, the identification information of the first multicast/broadcast service from the session management context of the PDU session of the terminal device.

8. The multicast/broadcast service communication method according to claim 6 or 7, wherein the method further comprises:
deleting, by the session management function network element based on the third message, an identifier of the terminal device and/or a session management context identifier of a PDU session from a context corresponding to the first multicast/broadcast service.

9. The multicast/broadcast service communication method according to any one of claims 6 to 8, wherein the method further comprises:
releasing, by the session management function network element from the session management context of the PDU session of the terminal device, unicast quality of service QoS information corresponding to the first multicast/broadcast service.

10. The method according to any one of claims 6 to 9, wherein the third message further carries a first information element and/or a cause value of the third message, and
the first information element indicates that an operation type corresponding to the first multicast/broadcast service is leave, and the cause value of the third message represents that the terminal device is to leave the first multicast/broadcast service.

11. The method according to any one of claims 6 to 10, wherein the third message is a session management context update request of the PDU session.

12. The method according to any one of claims 6 to 11, wherein the method further comprises:
when the terminal device is the last terminal device that leaves the first multicast/broadcast service via the session management function network element, sending, by the session management function network element, a fourth message to a user plane function network element, wherein the fourth message is used to release a transmission tunnel between the user plane function network element and a service source of the first multicast/broadcast service.

13. The method according to any one of claims 6 to 12, wherein the method further comprises:
sending, by the session management function network element, a fifth message to a multicast/broadcast control plane function network element, wherein the fifth message carries the identification information of the first multicast/broadcast service.

14. The method according to claim 13, wherein the fifth message further comprises one or more of the following:
the identifier of the terminal device, an identifier of the session management function network element, an identifier of an access network device accessed by the terminal device, and an identifier of the user plane function network element corresponding to the first multicast/broadcast service.

15. The method according to any one of claims 6 to 14, wherein the method further comprises:
sending, by the session management function network element, a sixth message, wherein the sixth message carries the identification information of the first multicast/broadcast service.

16. The method according to claim 15, wherein the sixth message further carries the first information element and/or a cause value of the sixth message, and
the first information element indicates that the operation type corresponding to the first multicast/broadcast service is leave, and the cause value of the sixth message represents that the terminal device is to leave the first multicast/broadcast service.

17. A multicast/broadcast service communication method, comprising:
receiving, by a multicast/broadcast control plane function network element, a seventh message, wherein the seventh message carries identification information of a first multicast/broadcast service, and the first multicast/broadcast service is a multicast/broadcast service that a terminal device is to leave; and
updating, by the multicast/broadcast control plane function network element, a multicast/broadcast service context of the first multicast/broadcast service based on the seventh message.

18. The method according to claim 17, wherein the multicast/broadcast service context of the first multicast/broadcast service comprises:
the identification information of the first multicast/broadcast service, an identifier of a session management function network element corresponding to the first multicast/broadcast service, and identifiers and a quantity of terminal devices that join the first multicast/broadcast service via the session management function network element;
the identification information of the first multicast/broadcast service, an identifier of an access network device corresponding to the first multicast/broadcast service, and identifiers and a quantity of terminal devices that join the first multicast/broadcast service via the access network device;
the identification information of the first multicast/broadcast service, an identifier of a user plane function network element corresponding to the first multicast/broadcast service, and identifiers and a quantity of terminal devices that join the first multicast/broadcast service via the user plane function network element;
the identification information of the first multicast/broadcast service and an identifier of a session management function network element corresponding to the first multicast/broadcast service;
the identification information of the first multicast/broadcast service and an identifier of an access network device corresponding to the first multicast/broadcast service; or
the identification information of the first multicast/broadcast service and an identifier of a user plane function network element corresponding to the first multicast/broadcast service.

19. The method according to claim 17 or 18, wherein the updating, by the multicast/broadcast control plane function network element, a multicast/broadcast service context of the first multicast/broadcast service comprises:
when the multicast/broadcast service context of the first multicast/broadcast service comprises the identification information of the first multicast/broadcast service, the identifier of the session management function network element corresponding to the first multicast/broadcast service, and the identifiers and the quantity of terminal devices that join the first multicast/broadcast service via the session management function network element, and when the terminal device joins the first multicast/broadcast service via a first session management function network element in the session management function network element, deleting the terminal device from terminal devices that join the first multicast/broadcast service via the first session management function network element, and updating a quantity of terminal devices that join the first multicast/broadcast service via the first session management function network element;
when the multicast/broadcast service context of the first multicast/broadcast service comprises the identification information of the first multicast/broadcast service, the identifier of the access network device corresponding to the first multicast/broadcast service, and the identifiers and the quantity of terminal devices that join the first multicast/broadcast service via the access network device, and when the terminal device joins the first multicast/broadcast service via a first access network device in the access network device, deleting the terminal device from terminal devices that join the first multicast/broadcast service via the first access network device, and updating a quantity of terminal devices that join the first multicast/broadcast service via the first access network device;
when the multicast/broadcast service context of the first multicast/broadcast service comprises the identification information of the first multicast/broadcast service, the identifier of the user plane function network element corresponding to the first multicast/broadcast service, and the identifiers and the quantity of terminal devices that join the first multicast/broadcast service via the user plane function network element, and when the terminal device joins the first multicast/broadcast service via a first user plane function network element in the user plane function network element, deleting the terminal device from terminal devices that join the first multicast/broadcast service via the first user plane function network element, and updating a quantity of terminal devices that join the first multicast/broadcast service via the first user plane function network element;
when the multicast/broadcast service context of the first multicast/broadcast service comprises the identification information of the first multicast/broadcast service and the identifier of the session management function network element corresponding to the first multicast/broadcast service, and when the terminal device is the last terminal device that leaves the first multicast/broadcast service via a first session management function network element in the session management function network element, deleting an identifier of the first session management function network element from the multicast/broadcast service context;
when the multicast/broadcast service context of the first multicast/broadcast service comprises the identification information of the first multicast/broadcast service and the identifier of the access network device corresponding to the first multicast/broadcast service, and when the terminal device is the last terminal device that leaves the first multicast/broadcast service via a first access network device in the access network device, deleting an identifier of the first access network device from the multicast/broadcast service context; or
when the multicast/broadcast service context of the first multicast/broadcast service comprises the identification information of the first multicast/broadcast service and the identifier of the user plane function network element corresponding to the first multicast/broadcast service, and when the terminal device is the last terminal device that leaves the first multicast/broadcast service via a first user plane function network element in the user plane function network element, deleting an identifier of the first user plane function network element from the multicast/broadcast service context.

20. The method according to any one of claims 17 to 19, wherein the seventh message further carries a first information element and/or a cause value of the seventh message, and
the first information element indicates that an operation type corresponding to the first multicast/broadcast service is leave, and the cause value of the seventh message represents that the terminal device is to leave the first multicast/broadcast service.

21. The method according to any one of claims 17 to 20, wherein the seventh message further comprises one or more of the following:
an identifier of the terminal device, an identifier of a session management function network element corresponding to a first PDU session, the identifier of the access network device accessed by the terminal device, and the identifier of the user plane function network element corresponding to the first multicast/broadcast service, wherein the first PDU session is a PDU session that is in a PDU session of the terminal device and that is associated with the first multicast/broadcast service.

22. A multicast/broadcast service communication method, comprising:
receiving, by an access network device, an eighth message, wherein the eighth message carries identification information of a first multicast/broadcast service, and the first multicast/broadcast service is a multicast/broadcast service that a terminal device is to leave; and
releasing, by the access network device, an air interface resource that is allocated to the terminal device for the first multicast/broadcast service.

23. The method according to claim 22, wherein the method further comprises:
when the terminal device is the last terminal device that leaves the first multicast/broadcast service via the access network device, releasing, by the access network device, a service data transmission tunnel between the access network device and a core network device for the first multicast/broadcast service.

24. The method according to claim 22 or 23, wherein the method further comprises:
sending, by the access network device, a PDU session modification request message to a session management function network element corresponding to a first PDU session, wherein the PDU session modification request message carries the identification information of the first multicast/broadcast service, and the first PDU session is a PDU session that is in a PDU session of the terminal device and that is associated with the first multicast/broadcast service.

25. The method according to claim 24, wherein the PDU session modification request message further carries a first information element and/or a cause value of the PDU session modification request message, and
the first information element indicates that an operation type corresponding to the first multicast/broadcast service is leave, and the cause value of the PDU session modification request message represents that the terminal device is to leave the first multicast/broadcast service.

26. A communication apparatus, comprising:
a processing unit, configured to determine a first multicast/broadcast service, wherein the first multicast/broadcast service is a multicast/broadcast service that a terminal device is to leave; and
a sending unit, configured to send a first message, wherein the first message carries identification information of the first multicast/broadcast service.

27. The communication apparatus according to claim 26, further comprising a receiving unit, configured to:
receive a second message, wherein
the second message carries information indicating that the terminal device has left the first multicast/broadcast service, or the second message carries identification information of a multicast/broadcast service that the terminal device has left.

28. The communication apparatus according to claim 26 or 27, wherein the first message further carries a first information element and/or a cause value of the first message, and
the first information element indicates that an operation type corresponding to the first multicast/broadcast service is leave, and the cause value of the first message represents that the terminal device is to leave the first multicast/broadcast service.

29. The communication apparatus according to any one of claims 26 to 28, wherein the first message is a protocol data unit PDU session modification request message, a PDU session release request message, a radio resource control RRC message, or a hypertext transfer protocol HTTP message.

30. The communication apparatus according to claim 27, wherein the second message is a radio resource control RRC message or a hypertext transfer protocol HTTP message.

31. A communication apparatus, comprising:
a receiving unit, configured to receive a third message, wherein the third message carries identification information of a first multicast/broadcast service, and the first multicast/broadcast service is a multicast/broadcast service that a terminal device is to leave; and
a processing unit, configured to update a session management context of a protocol data unit PDU session of the terminal device based on the third message.

32. The communication apparatus according to claim 31, wherein the processing unit is configured to:
delete the identification information of the first multicast/broadcast service from the session management context of the PDU session of the terminal device.

33. The communication apparatus according to claim 31 or 32, wherein the processing unit is further configured to:
delete, based on the third message, an identifier of the terminal device and/or a session management context identifier of a PDU session from a context corresponding to the first multicast/broadcast service.

34. The communication apparatus according to any one of claims 31 to 33, wherein the processing unit is further configured to:
release, from the session management context of the PDU session of the terminal device, unicast quality of service QoS information corresponding to the first multicast/broadcast service.

35. The communication apparatus according to any one of claims 31 to 34, wherein the third message further carries a first information element and/or a cause value of the third message, and
the first information element indicates that an operation type corresponding to the first multicast/broadcast service is leave, and the cause value of the third message represents that the terminal device is to leave the first multicast/broadcast service.

36. The communication apparatus according to any one of claims 31 to 34, wherein the third message is a session management context update request of the PDU session.

37. The communication apparatus according to any one of claims 31 to 36, further comprising a sending unit, configured to:
when the terminal device is the last terminal device that leaves the first multicast/broadcast service via a session management function network element, send a fourth message to a user plane function network element, wherein the fourth message is used to release a transmission tunnel between the user plane function network element and a service source of the first multicast/broadcast service.

38. The communication apparatus according to any one of claims 31 to 37, further comprising the sending unit, configured to:
send a fifth message to a multicast/broadcast control plane function network element, wherein the fifth message carries the identification information of the first multicast/broadcast service.

39. The communication apparatus according to claim 38, wherein the fifth message further comprises one or more of the following:
the identifier of the terminal device, an identifier of the session management function network element, an identifier of an access network device accessed by the terminal device, and an identifier of the user plane function network element corresponding to the first multicast/broadcast service.

40. The communication apparatus according to any one of claims 31 to 39, further comprising the sending unit, configured to:
send a sixth message, wherein the sixth message carries the identification information of the first multicast/broadcast service.

41. The communication apparatus according to claim 40, wherein the sixth message further carries the first information element and/or a cause value of the sixth message, and
the first information element indicates that the operation type corresponding to the first multicast/broadcast service is leave, and the cause value of the sixth message represents that the terminal device is to leave the first multicast/broadcast service.

42. A communication apparatus, comprising:
a receiving unit, configured to receive a seventh message, wherein the seventh message carries identification information of a first multicast/broadcast service, and the first multicast/broadcast service is a multicast/broadcast service that a terminal device is to leave; and
a processing unit, configured to update a multicast/broadcast service context of the first multicast/broadcast service based on the seventh message.

43. The communication apparatus according to claim 42, wherein the multicast/broadcast service context of the first multicast/broadcast service comprises:
the identification information of the first multicast/broadcast service, an identifier of a session management function network element corresponding to the first multicast/broadcast service, and identifiers and a quantity of terminal devices that join the first multicast/broadcast service via the session management function network element;
the identification information of the first multicast/broadcast service, an identifier of an access network device corresponding to the first multicast/broadcast service, and identifiers and a quantity of terminal devices that join the first multicast/broadcast service via the access network device;
the identification information of the first multicast/broadcast service, an identifier of a user plane function network element corresponding to the first multicast/broadcast service, and identifiers and a quantity of terminal devices that join the first multicast/broadcast service via the user plane function network element;
the identification information of the first multicast/broadcast service and an identifier of a session management function network element corresponding to the first multicast/broadcast service;
the identification information of the first multicast/broadcast service and an identifier of an access network device corresponding to the first multicast/broadcast service; or
the identification information of the first multicast/broadcast service and an identifier of a user plane function network element corresponding to the first multicast/broadcast service.

44. The communication apparatus according to claim 42 or 43, wherein the processing unit is configured to:
when the multicast/broadcast service context of the first multicast/broadcast service comprises the identification information of the first multicast/broadcast service, the identifier of the session management function network element corresponding to the first multicast/broadcast service, and the identifiers and the quantity of terminal devices that join the first multicast/broadcast service via the session management function network element, and when the terminal device joins the first multicast/broadcast service via a first session management function network element in the session management function network element, delete the terminal device from terminal devices that join the first multicast/broadcast service via the first session management function network element, and update a quantity of terminal devices that join the first multicast/broadcast service via the first session management function network element;
when the multicast/broadcast service context of the first multicast/broadcast service comprises the identification information of the first multicast/broadcast service, the identifier of the access network device corresponding to the first multicast/broadcast service, and the identifiers and the quantity of terminal devices that join the first multicast/broadcast service via the access network device, and when the terminal device joins the first multicast/broadcast service via a first access network device in the access network device, delete the terminal device from terminal devices that join the first multicast/broadcast service via the first access network device, and update a quantity of terminal devices that join the first multicast/broadcast service via the first access network device;
when the multicast/broadcast service context of the first multicast/broadcast service comprises the identification information of the first multicast/broadcast service, the identifier of the user plane function network element corresponding to the first multicast/broadcast service, and the identifiers and the quantity of terminal devices that join the first multicast/broadcast service via the user plane function network element, and when the terminal device joins the first multicast/broadcast service via a first user plane function network element in the user plane function network element, delete the terminal device from terminal devices that join the first multicast/broadcast service via the first user plane function network element, and update a quantity of terminal devices that join the first multicast/broadcast service via the first user plane function network element;
when the multicast/broadcast service context of the first multicast/broadcast service comprises the identification information of the first multicast/broadcast service and the identifier of the session management function network element corresponding to the first multicast/broadcast service, and when the terminal device is the last terminal device that leaves the first multicast/broadcast service via a first session management function network element in the session management function network element, delete an identifier of the first session management function network element from the multicast/broadcast service context;
when the multicast/broadcast service context of the first multicast/broadcast service comprises the identification information of the first multicast/broadcast service and the identifier of the access network device corresponding to the first multicast/broadcast service, and when the terminal device is the last terminal device that leaves the first multicast/broadcast service via a first access network device in the access network device, delete an identifier of the first access network device from the multicast/broadcast service context; or
when the multicast/broadcast service context of the first multicast/broadcast service comprises the identification information of the first multicast/broadcast service and the identifier of the user plane function network element corresponding to the first multicast/broadcast service, and when the terminal device is the last terminal device that leaves the first multicast/broadcast service via a first user plane function network element in the user plane function network element, delete an identifier of the first user plane function network element from the multicast/broadcast service context.

45. The communication apparatus according to any one of claims 42 to 44, wherein the seventh message further carries a first information element and/or a cause value of the seventh message, and
the first information element indicates that an operation type corresponding to the first multicast/broadcast service is leave, and the cause value of the seventh message represents that the terminal device is to leave the first multicast/broadcast service.

46. The communication apparatus according to any one of claims 42 to 45, wherein the seventh message further comprises one or more of the following:
an identifier of the terminal device, an identifier of a session management function network element corresponding to a first PDU session, the identifier of the access network device accessed by the terminal device, and the identifier of the user plane function network element corresponding to the first multicast/broadcast service, wherein the first PDU session is a PDU session that is in a PDU session of the terminal device and that is associated with the first multicast/broadcast service.

47. A communication apparatus, comprising:
a receiving unit, configured to receive an eighth message, wherein the eighth message carries identification information of a first multicast/broadcast service, and the first multicast/broadcast service is a multicast/broadcast service that a terminal device is to leave; and
a processing unit, configured to release an air interface resource that is allocated to the terminal device for the first multicast/broadcast service.

48. The communication apparatus according to claim 47, wherein the processing unit is further configured to:
when the terminal device is the last terminal device that leaves the first multicast/broadcast service via an access network device, release a service data transmission tunnel between the access network device and a core network device for the first multicast/broadcast service.

49. The communication apparatus according to claim 47 or 48, further comprising a sending unit, configured to:
send a PDU session modification request message to a session management function network element corresponding to a first PDU session, wherein the PDU session modification request message carries the identification information of the first multicast/broadcast service, and the first PDU session is a PDU session that is in a PDU session of the terminal device and that is associated with the first multicast/broadcast service.

50. The communication apparatus according to claim 49, wherein the PDU session modification request message further carries a first information element and/or a cause value of the PDU session modification request message, and
the first information element indicates that an operation type corresponding to the first multicast/broadcast service is leave, and the cause value of the PDU session modification request message represents that the terminal device is to leave the first multicast/broadcast service.

51. A multicast/broadcast service communication method, comprising:
receiving, by a session management function network element, a third message, wherein the third message carries identification information of a first multicast/broadcast service, and the first multicast/broadcast service is a multicast/broadcast service that a terminal device is to leave;
receiving, by the session management function network element, a fourteenth message, wherein the fourteenth message carries identification information of a protocol data unit PDU session associated with the first multicast/broadcast service; and
updating, by the session management function network element, a session management context of a PDU session of the terminal device based on the fourteenth message.

52. The multicast/broadcast service communication method according to claim 51, wherein the updating, by the session management function network element, a session management context of a protocol data unit PDU session of the terminal device based on the fourteenth message comprises:
deleting, by the session management function network element, the identification information of the first multicast/broadcast service from the session management context of the PDU session of the terminal device.

53. The multicast/broadcast service communication method according to claim 51 or 52, wherein the method further comprises:
deleting, by the session management function network element, an identifier of the terminal device and/or a session management context identifier of the PDU session from a context corresponding to the first multicast/broadcast service.

54. The multicast/broadcast service communication method according to any one of claims 51 to 53, wherein the method further comprises:
releasing, by the session management function network element from the session management context of the PDU session of the terminal device, unicast quality of service QoS information corresponding to the first multicast/broadcast service.

55. A communication apparatus, comprising:
a receiving unit, configured to receive a third message, wherein the third message carries identification information of a first multicast/broadcast service, and the first multicast/broadcast service is a multicast/broadcast service that a terminal device is to leave, wherein
the receiving unit is further configured to receive a fourteenth message, wherein the fourteenth message carries identification information of a protocol data unit PDU session associated with the first multicast/broadcast service; and
a processing unit, configured to update a session management context of a PDU session of the terminal device based on the fourteenth message.

56. The communication apparatus according to claim 55, wherein the processing unit is configured to:
delete the identification information of the first multicast/broadcast service from the session management context of the PDU session of the terminal device.

57. The communication apparatus according to claim 55 or 56, wherein the processing unit is further configured to:
delete an identifier of the terminal device and/or a session management context identifier of the PDU session from a context corresponding to the first multicast/broadcast service.

58. The communication apparatus according to any one of claims 55 to 57, wherein the processing unit is further configured to:
release, from the session management context of the PDU session of the terminal device, unicast quality of service QoS information corresponding to the first multicast/broadcast service.

59. A communication apparatus, wherein the communication apparatus comprises a transceiver, a memory, and a processor, the processor is coupled to the memory, and
the memory is configured to store computer-executable instructions; and when the communication apparatus runs, the processor executes the computer-executable instructions, to enable the communication apparatus to perform the multicast/broadcast service communication method according to any one of claims 1 to 5.

60. A communication apparatus, wherein the communication apparatus comprises a transceiver, a memory, and a processor, the processor is coupled to the memory, and
the memory is configured to store computer-executable instructions; and when the communication apparatus runs, the processor executes the computer-executable instructions, to enable the communication apparatus to perform the multicast/broadcast service communication method according to any one of claims 6 to 16 or 51 to 54.

61. A communication apparatus, wherein the communication apparatus comprises a transceiver, a memory, and a processor, the processor is coupled to the memory, and
the memory is configured to store computer-executable instructions; and when the communication apparatus runs, the processor executes the computer-executable instructions, to enable the communication apparatus to perform the multicast/broadcast service communication method according to any one of claims 17 to 21.

62. A communication apparatus, wherein the communication apparatus comprises a transceiver, a memory, and a processor, the processor is coupled to the memory, and
the memory is configured to store computer-executable instructions; and when the communication apparatus runs, the processor executes the computer-executable instructions, to enable the communication apparatus to perform the multicast/broadcast service communication method according to any one of claims 22 to 25.

63. A multicast/broadcast service communication system, wherein the multicast/broadcast service communication system comprises the communication apparatus according to any one of claims 26 to 30, the communication apparatus according to any one of claims 31 to 41 or claims 55 to 58, the communication apparatus according to any one of claims 42 to 46, and the communication apparatus according to any one of claims 47 to 50.
